# EUROPEAN PATENT APPLICATION

(11) **EP 4 823 044 A1**
(43) Date of publication of application: **14.10.2026**
(21) Application number: 23961229.4
(22) Date of filing: 15.12.2023
(51) Int. Cl.: H04L 12/12

(54) **METHOD FOR MANAGING LOW-POWER STATE AND APPARATUS**

(71) Applicant: Huawei Technologies Co., Ltd., Shenzhen, Guangdong 518129 (CN)
(72) Inventor: LI, Zhengbing, Shenzhen, Guangdong 518129 (CN); SHI, Xuan, Shenzhen, Guangdong 518129 (CN)
(74) Representative: Maiwald GmbH
(86) International application number: PCT/CN2023/139304
(87) International publication number: WO 2025/123373

(57) **Abstract**

This application provides a method and an apparatus for managing a low-power state, and relates to the communication field, to enable flexible low-power state management for various scenarios. The method includes: sending a first low-power request message to a second device, where the first low-power request message includes a first low-power request mode, a first low-power request direction, and a low-power request gear, the first low-power request mode is entering low power, and the first low-power request direction includes unidirectional or bidirectional; and receiving, from the second device, acknowledgment/negative acknowledgment information corresponding to the first low-power request message.

## Description

### TECHNICAL FIELD

This application relates to the communication field, and in particular, to a method and an apparatus for managing a low-power state.

### BACKGROUND

With development of ultra-high definition technologies (such as 4K/8K technologies), an ultra-high definition transmission interface needs to support an increasingly higher rate, and a higher rate requires more power consumption. Therefore, how to enter a low-power state when a service is idle and how to exit the low-power state when a service is busy are currently common technical solutions in the industry for reducing power consumption of the ultra-high definition transmission interface.

Flexible low-power state management for various scenarios remains an urgent problem to be resolved in the industry.

### SUMMARY

This application provides a method and an apparatus for managing a low-power state, to flexibly support management of a low-power state in various scenarios.

To achieve the foregoing objectives, the following technical solutions are used in embodiments of this application.

According to a first aspect, a method for managing a low-power state is provided. The method is applied to a first device or a chip in a first device. The method may include: sending a first low-power request message to a second device, where the first low-power request message includes a first low-power request mode, a first low-power request direction, and a low-power request gear, the first low-power request mode is entering low power, and the first low-power request direction includes unidirectional or bidirectional; and receiving, from the second device, acknowledgment/negative acknowledgment information corresponding to the first low-power request message.

According to the solution provided in this application, devices at two ends of a link negotiate, by using a low-power request message, to enter low power; indicate, by using a low-power request gear, a low-power state to be entered; and indicate, by using a low-power request solution, a link direction for entering the low-power state. In this low-power management solution, a plurality of different low-power states can be entered by using one request message. In addition, this solution can be applied to low-power management in different link directions, to flexibly support management of the low-power state in various scenarios.

The acknowledgment/negative acknowledgment information indicates that the second device acknowledges the first low-power request message. In other words, the second device agrees that all lanes in a link in the first low-power request direction enter the low-power state indicated by the low-power request gear.

In a possible implementation, a link between the first device and the second device includes a main link and a sideband link. The main link is a unidirectional transmitter link from the first device to the second device. The sideband link is a bidirectional link. Receiving the acknowledgment/negative acknowledgment information from the second device includes: receiving the acknowledgment/negative acknowledgment information from the second device through the sideband link. In a scenario in which the main link is a unidirectional transmitter link (a pure unidirectional transmitter link, where the main link of the first device has only a transmitter link, that is, there is no main link for sending service data to the first device by the second device, namely, the first device has no receiver link), a response message of the low-power request message is fed back through the sideband link, to implement low-power management of the unidirectional transmitter link.

A transmission rate of transmitting service data through the main link is greater than that of transmitting service data through the sideband link.

In another possible implementation, the method provided in this application may further include: A transmitter link in a main link of the first device enters a low-power state indicated by the low-power request gear. After receiving the acknowledgment/negative acknowledgment information, the first device completes negotiation with the second device, and the first device may complete that the transmitter link in the main link of the first device enters the low-power state indicated by the low-power request gear.

The main link of the first device is a set, in the main link between the first device and the second device, of a lane through which the first device sends data to the second device and a lane through which the first device receives data from the second device. The transmitter link in the main link of the first device, that is, the lane through which the first device sends data to the second device, may also be referred to as a port transmitter link of the first device.

In another possible implementation, the first low-power request direction is bidirectional. The method provided in this application may further include: A receiver link in the main link of the first device enters the low-power state indicated by the low-power request gear.

In another possible implementation, the low-power request gear may include one or more of the following: a low-power level at which a receiver side does not support a control frame-based wakeup capability; or a low-power level at which a receiver side supports a control frame-based wakeup capability.

In another possible implementation, the first low-power request message is packaged as a logical layer main link management packet or a logical layer sideband link management packet for transmission.

In another possible implementation, the low-power request gear is the low-power level at which the receiver side does not support the control frame-based wakeup capability. The link between the first device and the second device includes the main link and the sideband link. The method provided in this application may further include: sending a second low-power request message to the second device through the sideband link, where the second low-power request message includes a second low-power request mode and a second low-power request direction, the second low-power request mode is exiting low power, and the second low-power request direction includes unidirectional or bidirectional; and receiving, from the second device through the sideband link, acknowledgment/negative acknowledgment information corresponding to the second low-power request message. In a low-power scenario in which wakeup by using a wakeup frame is not supported, the low-power request message is transmitted through the sideband link to exit the low-power state, to more flexibly manage the low-power state.

In another possible implementation, the method provided in this application may further include: exiting, by the transmitter link in the main link of the first device, the low-power state; and after exiting the low-power state, continuously sending a first control frame to perform link recovery. After receiving the acknowledgment/negative acknowledgment information corresponding to the request for exiting low power, the first device completes negotiation with the second device. The first device may complete that the transmitter link in the main link of the first device exits the low-power state, and perform link recovery.

In another possible implementation, the method provided in this application may further include: The receiver link in the main link of the first device exits the low-power state. When the request message for exiting low power indicates bidirectional, a port is requested to exit the low-power state. Therefore, the receiver link in the main link of the first device also exits the low-power state.

In another possible implementation, the first low-power request direction is unidirectional, and the second low-power request direction is unidirectional.

In another possible implementation, the first low-power request direction is bidirectional, and the second low-power request direction is unidirectional.

In another possible implementation, the first low-power request direction is bidirectional, and the second low-power request direction is bidirectional.

In another possible implementation, the first low-power request direction is bidirectional. The low-power request gear is the low-power level at which the receiver side does not support the control frame-based wakeup capability. The link between the first device and the second device includes the main link and the sideband link. The method provided in this application may further include: receiving a third low-power request message from the second device through the sideband link, where the third low-power request message includes a third low-power request mode and a third low-power request direction, the third low-power request mode is exiting low power, and the third low-power request direction is bidirectional; and sending, to the second device through the sideband link, acknowledgment/negative acknowledgment information corresponding to the third low-power request message. Management of the low-power state of the port may be completed by either end device. This improves flexibility of low-power management and an application scenario.

In another possible implementation, the method provided in this application may further include: exiting, by the transmitter link and the receiver link in the main link of the first device, the low-power state; and after exiting the low-power state, continuously sending a first control frame to perform link recovery.

In another possible implementation, the method provided in this application may further include: exiting, by the transmitter link in the main link of the first device, the low-power state; sending one or more second control frames to the second device, where the second control frame is used by the transmitter side to wake up the high-speed link line, that is, all TX lanes of the transmitter side send LLCF_EIE to an RX lane of the receiver side to wake up the RX lane of the receiver side, and different lane rates correspond to different second-control-frame payloads; and continuously sending a first control frame to perform link recovery. For the low-power state that supports wakeup by using a wakeup frame, the first device may exit low power by sending the wakeup frame; and configure, at different lane rates, different second-control-frame payloads used for wakeup, so that a peer end can determine a lane rate based on a control-frame payload, and complete lane recovery more quickly based on the lane rate to exit the low-power state, thereby improving efficiency of low-power management.

In another possible implementation, the method provided in this application may further include: receiving one or more second control frames from the second device, where the second control frame is used by the transmitter side to wake up the high-speed link line, and different lane rates correspond to different second-control-frame payloads; and exiting, by the receiver link in the main link of the first device, the low-power state.

In another possible implementation, when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times; when a lane rate is HS2 (6 Gbps/8 Gbps), a payload length of a second control frame is 32 bytes, and a payload is fixedly 0x0000_0000_FFFF_FFFF repeated four times; when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

In another possible implementation, the first control frame is a logical layer training sequence 2 (Control Frame, Training Sequence2, LLCF_TS2), and LLCF_TS2 is used to confirm a synchronization status between the transmitter side and the receiver side.

In another possible implementation, continuously sending the first control frame to perform link recovery includes: continuously sending the first control frame to perform lane locking; and after lane locking succeeds, performing multi-lane alignment.

In another possible implementation, a specified quantity of first control frames indicate that lane locking succeeds.

According to a second aspect, another method for managing a low-power state is provided. The method is applied to a second device or a chip in a second device. The method may include: receiving a first low-power request message from the first device, where the first low-power request message includes a first low-power request mode, a first low-power request direction, and a low-power request gear, the first low-power request mode is entering low power, and the first low-power request direction includes unidirectional or bidirectional; and sending, to the first device, acknowledgment/negative acknowledgment information corresponding to the first low-power request message.

According to the solution provided in this application, devices at two ends of a link negotiate, by using a low-power request message, to enter low power; indicate, by using a low-power request gear, a low-power state to be entered; and indicate, by using a low-power request solution, a link direction for entering the low-power state. In this low-power management solution, a plurality of different low-power states can be entered by using one request message. In addition, this solution can be applied to low-power management in different link directions, to flexibly support management of the low-power state in various scenarios.

In a possible implementation, a link between the first device and the second device includes a main link and a sideband link. The main link is a unidirectional transmitter link from the first device to the second device. The sideband link is a bidirectional link. Sending, to the first device, the acknowledgment/negative acknowledgment information corresponding to the first low-power request message includes: sending the acknowledgment/negative acknowledgment information through the sideband link. In a scenario in which the main link is a unidirectional transmitter link (a pure unidirectional transmitter link, that is, there is no main link for sending data to the first device by the second device), a response message of the low-power request message is fed back through the sideband link, to implement low-power management of the unidirectional transmitter link.

In another possible implementation, the method provided in this application may further include: A receiver link in a main link of the second device enters a low-power state indicated by the low-power request gear. After sending the acknowledgment/negative acknowledgment information, the second device completes negotiation with the first device, and the second device may complete that the receiver link in the main link of the second device enters the low-power state indicated by the low-power request gear.

In another possible implementation, the first low-power request direction is bidirectional. The method provided in this application may further include: A transmitter link in the main link of the second device enters the low-power state indicated by the low-power request gear.

In another possible implementation, the low-power request gear may include one or more of the following: a low-power level at which a receiver side does not support a control frame-based wakeup capability; or a low-power level at which a receiver side supports a control frame-based wakeup capability.

In another possible implementation, the first low-power request message is packaged as a logical layer main link management packet or a logical layer sideband link management packet for transmission.

In another possible implementation, the low-power request gear is the low-power level at which the receiver side does not support the control frame-based wakeup capability. The link between the first device and the second device includes the main link and the sideband link. The method provided in this application may further include: receiving a second low-power request message from the first device through the sideband link, where the second low-power request message includes a second low-power request mode and a second low-power request direction, the second low-power request mode is exiting low power, and the second low-power request direction includes unidirectional or bidirectional; and sending, to the first device through the sideband link, acknowledgment/negative acknowledgment information corresponding to the second low-power request message. In a low-power scenario in which wakeup by using a wakeup frame is not supported, the low-power request message is transmitted through the sideband link to exit the low-power state, to more flexibly manage the low-power state.

In another possible implementation, the method provided in this application may further include: The receiver link in the main link of the second device exits the low-power state. After sending the acknowledgment/negative acknowledgment information corresponding to the request for exiting low power, the second device completes negotiation with the first device. The second device may complete that the transmitter link in the main link of the first device exits the low-power state.

In another possible implementation, the method provided in this application may further include: exiting, by the transmitter link in the main link of the second device, the low-power state; and after exiting the low-power state, continuously sending a first control frame to perform link recovery. When the request message for exiting low power indicates bidirectional, a port is requested to exit the low-power state. Therefore, the transmitter link in the main link of the second device also exits the low-power state.

In another possible implementation, the first low-power request direction is unidirectional, and the second low-power request direction is unidirectional.

In another possible implementation, the first low-power request direction is bidirectional, and the second low-power request direction is unidirectional.

In another possible implementation, the first low-power request direction is bidirectional, and the second low-power request direction is bidirectional.

In another possible implementation, the first low-power request direction is bidirectional. The low-power request gear is the low-power level at which the receiver side does not support the control frame-based wakeup capability. The link between the first device and the second device includes the main link and the sideband link. The method provided in this application may further include: sending a third low-power request message to the first device through the sideband link, where the third low-power request message includes a third low-power request mode and a third low-power request direction, the third low-power request mode is exiting low power, and the third low-power request direction is bidirectional; and receiving, from the first device through the sideband link, acknowledgment/negative acknowledgment information corresponding to the third low-power request message. Management of the low-power state of the port may be completed by either end device. This improves flexibility of low-power management and an application scenario.

In another possible implementation, the method provided in this application may further include: exiting, by the transmitter link and the receiver link in the main link of the second device, the low-power state; and after exiting the low-power state, continuously sending a first control frame to perform link recovery.

In another possible implementation, the method provided in this application may further include: receiving one or more second control frames from the first device, where the second control frame is used by the transmitter side to wake up the high-speed link line, and different lane rates correspond to different second-control-frame payloads; and exiting, by the receiver link in the main link of the second device, the low-power state. For the low-power state that supports wakeup by using a wakeup frame, the first device may exit low power by sending the wakeup frame; and configure, at different lane rates, different second-control-frame payloads used for wakeup, so that a peer end can determine a lane rate based on a control-frame payload, and complete lane recovery more quickly based on the lane rate to exit the low-power state, thereby improving efficiency of low-power management.

In another possible implementation, the method provided in this application may further include: exiting, by the transmitter link in the main link of the second device, the low-power state; sending one or more second control frames to the first device; and continuously sending a first control frame to perform link recovery.

In another possible implementation, when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times; when a lane rate is HS2 (6 Gbps/8 Gbps), a payload length of a second control frame is 32 bytes, and a payload is fixedly 0x0000_0000_FFFF_FFFF repeated four times; when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

In another possible implementation, the first control frame is an LLCF_TS2, and LLCF_TS2 is used to confirm a synchronization status between the transmitter side and the receiver side.

In another possible implementation, continuously sending the first control frame to perform link recovery includes: continuously sending the first control frame to perform lane locking; and after lane locking succeeds, performing multi-lane alignment.

In another possible implementation, a specified quantity of first control frames indicate that lane locking succeeds.

According to a third aspect, another method for managing a low-power state is provided. The method is applied to a first device or a chip in a first device. A link between the first device and a second device includes a main link and a sideband link. The method may include: sending a second low-power request message to the second device through the sideband link, where the second low-power request message includes a second low-power request mode and a second low-power request direction, the second low-power request mode is exiting low power, and the second low-power request direction includes unidirectional or bidirectional; and receiving, from the second device through the sideband link, acknowledgment/negative acknowledgment information corresponding to the second low-power request message.

Through the solution provided in this application, in a scenario in which wakeup by using a wakeup frame is not supported, the low-power request message is transmitted through the sideband link to exit the low-power state, to more flexibly manage the low-power state.

The transmitter link in the main link of the first device is in a low-power level at which a control frame-based wakeup capability is not supported.

In another possible implementation, the method provided in this application may further include: exiting, by the transmitter link in the main link of the first device, the low-power state; and after exiting the low-power state, continuously sending a first control frame to perform link recovery. After receiving the acknowledgment/negative acknowledgment information corresponding to the request for exiting low power, the first device completes negotiation with the second device. The first device may complete that the transmitter link in the main link of the first device exits the low-power state, and perform link recovery.

In another possible implementation, the method provided in this application may further include: The receiver link in the main link of the first device exits the low-power state. When the request message for exiting low power indicates bidirectional, a port is requested to exit the low-power state. Therefore, the receiver link in the main link of the first device also exits the low-power state.

In another possible implementation, the main link between the first device and the second device is a unidirectional transmitter link (pure unidirectional link), and the second low-power request direction is unidirectional or multi-directional.

In another possible implementation, the main link between the first device and the second device is a bidirectional transmitter/receiver link, and the second low-power request direction is bidirectional.

In another possible implementation, the first control frame is an LLCF_TS2, and LLCF_TS2 is used to confirm a synchronization status between the transmitter side and the receiver side.

In another possible implementation, continuously sending the first control frame to perform link recovery includes: continuously sending the first control frame to perform lane locking; and after lane locking succeeds, performing multi-lane alignment.

In another possible implementation, a specified quantity of first control frames indicate that lane locking succeeds.

According to a fourth aspect, still another method for managing a low-power state is provided. The method is applied to a second device or a chip in a second device. A link between a first device and a second device includes a main link and a sideband link. The method may include: receiving a second low-power request message from the first device through the sideband link, where the second low-power request message includes a second low-power request mode and a second low-power request direction, the second low-power request mode is exiting low power, and the second low-power request direction includes unidirectional or bidirectional; and sending, to the first device through the sideband link, acknowledgment/negative acknowledgment information corresponding to the second low-power request message.

Through the solution provided in this application, in a scenario in which wakeup by using a wakeup frame is not supported, the low-power request message is transmitted through the sideband link to exit the low-power state, to more flexibly manage the low-power state.

The receiver link in the main link of the second device is in a low-power level at which a control frame-based wakeup capability is not supported.

In another possible implementation, the method provided in this application may further include: The receiver link in the main link of the second device exits the low-power state. After sending the acknowledgment/negative acknowledgment information corresponding to the request for exiting low power, the second device completes negotiation with the first device. The second device may complete that the transmitter link in the main link of the first device exits the low-power state.

In another possible implementation, the method provided in this application may further include: exiting, by the transmitter link in the main link of the second device, the low-power state; and after exiting the low-power state, continuously sending a first control frame to perform link recovery. When the request message for exiting low power indicates bidirectional, a port is requested to exit the low-power state. Therefore, the transmitter link in the main link of the second device also exits the low-power state.

In another possible implementation, the main link between the first device and the second device is a unidirectional transmitter link (pure unidirectional link), and the second low-power request direction is unidirectional or multi-directional.

In another possible implementation, the main link between the first device and the second device is a bidirectional transmitter/receiver link, and the second low-power request direction is bidirectional.

In another possible implementation, the first control frame is an LLCF_TS2, and LLCF_TS2 is used to confirm a synchronization status between the transmitter side and the receiver side.

In another possible implementation, continuously sending the first control frame to perform link recovery includes: continuously sending the first control frame to perform lane locking; and after lane locking succeeds, performing multi-lane alignment.

In another possible implementation, a specified quantity of first control frames indicate that lane locking succeeds.

According to a fifth aspect, another method for managing a low-power state is provided. The method is applied to a first device or a chip in a first device. The method provided in this application may further include: exiting, by a transmitter link in a main link of the first device, a low-power state; sending one or more second control frames to the second device, where the second control frame is used by a transmitter side to wake up a high-speed link line, and different lane rates correspond to different second-control-frame payloads; and continuously sending a first control frame to perform link recovery.

Through the solution provided in this application, for a low-power state that supports wakeup by using a wakeup frame, the first device may exit low power by sending the wakeup frame; and configure, at different lane rates, different second-control-frame payloads used for wakeup, so that a peer end can determine a lane rate based on a control-frame payload, and complete lane recovery more quickly based on the lane rate to exit the low-power state, thereby improving efficiency of low-power management.

In another possible implementation, the method provided in this application may further include: receiving one or more second control frames from the second device; and exiting, by a receiver link in a main link of the first device, the low-power state.

In another possible implementation, when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times; when a lane rate is HS2 (6 Gbps/8 Gbps), a payload length of a second control frame is 32 bytes, and a payload is fixedly 0x0000_0000_FFFF_FFFF repeated four times; when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

In another possible implementation, the first control frame is an LLCF_TS2, and LLCF_TS2 is used to confirm a synchronization status between the transmitter side and the receiver side.

In another possible implementation, continuously sending the first control frame to perform link recovery includes: continuously sending the first control frame to perform lane locking; and after lane locking succeeds, performing multi-lane alignment.

In another possible implementation, a specified quantity of first control frames indicate that lane locking succeeds.

According to a sixth aspect, still another method for managing a low-power state is provided. The method is applied to a second device or a chip in a second device. The method provided in this application may further include: receiving one or more second control frames from a first device, where the second control frame is used by a transmitter side to wake up a high-speed link line, and different lane rates correspond to different second-control-frame payloads; and exiting, by a receiver link in a main link of the second device, the low-power state.

Through the solution provided in this application, for a low-power state that supports wakeup by using a wakeup frame, the first device may exit low power by sending the wakeup frame; and configure, at different lane rates, different second-control-frame payloads used for wakeup, so that a peer end can determine a lane rate based on a control-frame payload, and complete lane recovery more quickly based on the lane rate to exit the low-power state, thereby improving efficiency of low-power management.

In another possible implementation, the method provided in this application may further include: exiting, by the transmitter link in the main link of the second device, the low-power state; sending one or more second control frames to the first device; and continuously sending a first control frame to perform link recovery.

In another possible implementation, when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times; when a lane rate is HS2 (6 Gbps/8 Gbps), a payload length of a second control frame is 32 bytes, and a payload is fixedly 0x0000_0000_FFFF_FFFF repeated four times; when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

In another possible implementation, the first control frame is an LLCF_TS2, and LLCF_TS2 is used to confirm a synchronization status between the transmitter side and the receiver side.

In another possible implementation, continuously sending the first control frame to perform link recovery includes: continuously sending the first control frame to perform lane locking; and after lane locking succeeds, performing multi-lane alignment.

In another possible implementation, a specified quantity of first control frames indicate that lane locking succeeds.

According to a seventh aspect, an apparatus for managing a low-power state is provided. The apparatus is deployed in a first device or a chip in a first device. The apparatus may include: a sending unit and a receiving unit. Specifically:

The sending unit is configured to send a first low-power request message to a second device. The first low-power request message includes a first low-power request mode, a first low-power request direction, and a low-power request gear. The first low-power request mode is entering low power. The first low-power request direction includes unidirectional or bidirectional.

The receiving unit is configured to receive, from the second device, acknowledgment/negative acknowledgment information corresponding to the first low-power request message.

It should be noted that the apparatus for managing a low-power state provided in the seventh aspect is configured to implement the method for managing a low-power state provided in the first aspect or any possible implementation of the first aspect. For specific implementation of the apparatus, refer to the first aspect or any possible implementation of the first aspect. Details are not described herein again.

According to an eighth aspect, another apparatus for managing a low-power state is provided. The apparatus is used in a second device or a chip in a second device. The apparatus may include a receiving unit and a sending unit. Specifically:

The receiving unit is configured to receive a first low-power request message from a first device. The first low-power request message includes a first low-power request mode, a first low-power request direction, and a low-power request gear. The first low-power request mode is entering low power. The first low-power request direction includes unidirectional or bidirectional.

The sending unit is configured to send, to the first device, acknowledgment/negative acknowledgment information corresponding to the first low-power request message.

It should be noted that the apparatus for managing a low-power state provided in the eighth aspect is configured to implement the method for managing a low-power state provided in the second aspect or any possible implementation of the second aspect. For specific implementation of the apparatus, refer to the second aspect or any possible implementation of the second aspect. Details are not described herein again.

According to a ninth aspect, still another apparatus for managing a low-power state is provided. The apparatus is deployed in a first device or a chip in a first device. The apparatus may include: a sending unit and a receiving unit. Specifically:

The sending unit is configured to send a second low-power request message to a second device through a sideband link. The second low-power request message includes a second low-power request mode and a second low-power request direction. The second low-power request mode is exiting low power. The second low-power request direction includes unidirectional or bidirectional.

The receiving unit is configured to receive, from the second device through the sideband link, acknowledgment/negative acknowledgment information corresponding to the second low-power request message.

It should be noted that the apparatus for managing a low-power state provided in the ninth aspect is configured to implement the method for managing a low-power state provided in the third aspect or any possible implementation of the third aspect. For specific implementation of the apparatus, refer to the third aspect or any possible implementation of the third aspect. Details are not described herein again.

According to a tenth aspect, another apparatus for managing a low-power state is provided. The apparatus is used in a second device or a chip in a second device. The apparatus may include a receiving unit and a sending unit. Specifically:

The receiving unit is configured to receive a second low-power request message from a first device through a sideband link. The second low-power request message includes a second low-power request mode and a second low-power request direction. The second low-power request mode is exiting low power. The second low-power request direction includes unidirectional or bidirectional.

The sending unit is configured to send, to the first device through the sideband link, acknowledgment/negative acknowledgment information corresponding to the second low-power request message.

It should be noted that the apparatus for managing a low-power state provided in the tenth aspect is configured to implement the method for managing a low-power state provided in the fourth aspect or any possible implementation of the fourth aspect. For specific implementation of the apparatus, refer to the fourth aspect or any possible implementation of the fourth aspect. Details are not described herein again.

According to an eleventh aspect, still another apparatus for managing a low-power state is provided. The apparatus is deployed in a first device or a chip in a first device. The apparatus may include a management unit, a sending unit, and a recovery unit. Specifically:

The management unit is configured to control a transmitter link in a main link of the first device to exit a low-power state.

The sending unit is further configured to send one or more second control frames to a second device. The second control frame is used by a transmitter side to wake up a high-speed link line. Different lane rates correspond to different second-control-frame payloads.

The recovery unit is configured to continuously send a first control frame to perform link recovery.

It should be noted that the apparatus for managing a low-power state provided in the eleventh aspect is configured to implement the method for managing a low-power state provided in the fifth aspect or any possible implementation of the fifth aspect. For specific implementation of the apparatus, refer to the fifth aspect or any possible implementation of the fifth aspect. Details are not described herein again.

According to a twelfth aspect, another apparatus for managing a low-power state is provided. The apparatus is used in a second device or a chip in a second device. The apparatus may include a receiving unit and a management unit. Specifically:

The receiving unit is configured to receive one or more second control frames from a first device. The second control frame is used by a transmitter side to wake up a high-speed link line. Different lane rates correspond to different second-control-frame payloads.

The management unit is configured to control a receiver link in a main link of the second device to exit a low-power state.

It should be noted that the apparatus for managing a low-power state provided in the twelfth aspect is configured to implement the method for managing a low-power state provided in the sixth aspect or any possible implementation of the sixth aspect. For specific implementation of the apparatus, refer to the sixth aspect or any possible implementation of the sixth aspect. Details are not described herein again.

According to a thirteenth aspect, a compute device is provided. The compute device includes a memory and at least one processor. The memory is configured to store a group of computer instructions. When executing the group of computer instructions, the processor performs operations in the method according to any one of the first aspect to the sixth aspect or any possible implementation.

According to a fourteenth aspect, a chip is provided, including one or more interface circuits and one or more processors. The interface circuit is configured to: receive a signal from a memory of an electronic device, and send the received signal to the processor. The signal includes computer instructions stored in the memory. When the processor executes the computer instructions, the electronic device is enabled to perform operation steps in the method according to any one of the first aspect to the sixth aspect or any possible implementation.

According to a fifteenth aspect, a computer-readable storage medium is provided, including computer software instructions. When the computer software instructions are run on a computer, the computer is enabled to perform operations in the method according to any one of the first aspect to the sixth aspect or any possible implementation.

According to a sixteenth aspect, a computer program product is provided. When the computer program product runs on a computer, the computer is enabled to perform operation steps in the method according to any one of the first aspect to the sixth aspect or any possible implementation.

According to a seventeenth aspect, a data transmission system is provided. The data transmission system includes a data sending apparatus and a data receiving apparatus. The data sending apparatus includes the apparatus for managing a low-power state according to the seventh aspect. The data receiving apparatus includes the apparatus for managing a low-power state according to the eighth aspect.

According to an eighteenth aspect, a data transmission system is provided. The data transmission system includes a data sending apparatus and a data receiving apparatus. The data sending apparatus includes the apparatus for managing a low-power state according to the ninth aspect. The data receiving apparatus includes the apparatus for managing a low-power state according to the tenth aspect.

According to a nineteenth aspect, a data transmission system is provided. The data transmission system includes a data sending apparatus and a data receiving apparatus. The data sending apparatus includes the apparatus for managing a low-power state according to the eleventh aspect. The data receiving apparatus includes the apparatus for managing a low-power state according to the twelfth aspect.

The solutions provided in the seventh aspect to the nineteenth aspect are used to implement the method provided in any one of the first aspect to the sixth aspect. Therefore, the solutions can achieve same beneficial effect as those in any one of the first aspect to the sixth aspect. Details are not described herein again.

It should be noted that all possible implementations of any one of the foregoing aspects may be combined on a premise that there is no conflict between the solutions.

### BRIEF DESCRIPTION OF DRAWINGS

FIG. 1 is a diagram of a structure of a data transmission system according to an embodiment of this application;
FIG. 2 is a diagram of a structure of another data transmission system according to an embodiment of this application;
FIG. 3 is a diagram of basic components of an electronic device according to an embodiment of this application;
FIG. 4 is a diagram of inter-interface transmission according to an embodiment of this application;
FIG. 5 is a diagram of a structure of a compute device according to an embodiment of this application;
FIG. 6 is a schematic flowchart of a method for managing a low-power state according to an embodiment of this application;
FIG. 7 is a schematic flowchart of another method for managing a low-power state according to an embodiment of this application;
FIG. 8 is a schematic flowchart of still another method for managing a low-power state according to an embodiment of this application;
FIG. 9 is a schematic flowchart of still another method for managing a low-power state according to an embodiment of this application;
FIG. 10 is a schematic flowchart of still another method for managing a low-power state according to an embodiment of this application;
FIG. 11 is a schematic flowchart of still another method for managing a low-power state according to an embodiment of this application;
FIG. 12 is a schematic flowchart of still another method for managing a low-power state according to an embodiment of this application;
FIG. 13 is a schematic flowchart of still another method for managing a low-power state according to an embodiment of this application;
FIG. 14 is a diagram of a structure of an LLMMP according to an embodiment of this application;
FIG. 15 is a diagram of a structure of an LLSMP according to an embodiment of this application;
FIG. 16A and FIG. 16B are diagrams of a main link differential lane signal according to an embodiment of this application;
FIG. 17 is a diagram of a lane status management model according to an embodiment of this application;
FIG. 18 is a diagram of lane status conversion according to an embodiment of this application;
FIG. 19 is another diagram of lane status conversion according to an embodiment of this application;
FIG. 20A is still another diagram of lane status conversion according to an embodiment of this application;
FIG. 20B is a diagram of a link architecture corresponding to a TYPE-C MDP port according to an embodiment of this application;
FIG. 20C is a diagram of a link architecture corresponding to a TYPE-C MUP port according to an embodiment of this application;
FIG. 20D is a diagram of a link architecture corresponding to a TYPE-C DRD port according to an embodiment of this application;
FIG. 21 is a schematic flowchart of still another method for managing a low-power state according to an embodiment of this application;
FIG. 22 is a schematic flowchart of still another method for managing a low-power state according to an embodiment of this application;
FIG. 23 is a schematic flowchart of still another method for managing a low-power state according to an embodiment of this application;
FIG. 24 is a schematic flowchart of still another method for managing a low-power state according to an embodiment of this application;
FIG. 25 is a schematic flowchart of still another method for managing a low-power state according to an embodiment of this application;
FIG. 26 is a diagram of a structure of an apparatus for managing a low-power state according to an embodiment of this application;
FIG. 27 is a diagram of a structure of another apparatus for managing a low-power state according to an embodiment of this application;
FIG. 28 is a diagram of a structure of still another apparatus for managing a low-power state according to an embodiment of this application;
FIG. 29 is a diagram of a structure of still another apparatus for managing a low-power state according to an embodiment of this application; and
FIG. 30 is a diagram of a structure of still another apparatus for managing a low-power state according to an embodiment of this application.

### DESCRIPTION OF EMBODIMENTS

In embodiments of this application, to clearly describe the technical solutions in embodiments of this application, terms such as "first" and "second" are used to distinguish between same items or similar items that have basically same functions and purposes. A person skilled in the art may understand that the terms such as "first" and "second" do not limit a quantity or an execution sequence, and the terms such as "first" and "second" do not indicate a definite difference. There is no sequence or magnitude sequence between technical features described by "first" and "second".

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, at least one may alternatively be described as one or more, and a plurality of may be two, three, four, or more. This is not limited in this application.

The network architecture and the scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

For ease of understanding, the related terms in embodiments of this application are first explained.

Lane (lane): is a circuit used to transmit signals. A single-ended lane includes a line, and a high-speed differential lane includes a pair of lines.

Link (link): is used to transmit a data signal or supply power, and usually includes one or more lanes. The link is a collection of lanes or a conductor line used for power supply.

Main link (main Link): is a point-to-point link formed by one or more lanes based on a high-speed differential signal. The main link is used to transmit high-speed service data (also referred to as "high-speed data"), for example, high-speed data such as audio and video signals and third-party protocol data. The main link may be a bidirectional link, that is, the main link includes lanes in different directions; or may be a unidirectional link, that is, the main link includes lanes in a same direction.

Sideband link (sideband link, SL): is a point-to-point link formed by a transmitter lane and a receiver lane based on a low-speed single-ended signal; and is used to transmit low-speed data, for example, transmit low-speed data such as a device management signal, a port management signal, a bandwidth management signal, and a power supply management signal, and is further used to transmit a control packet. The sideband link is a bidirectional link.

Transmitter side/Receiver side (Transmitter Side/Receiver Side): Two sides of a link (usually including a plurality of lanes) are respectively referred to as a transmitter side and a receiver side. A data stream flows from the transmitter side to the receiver side.

If a main link of a port includes only a unidirectional link, the main link of the port has only a transmitter side or a receiver side. If a main link of a port is a bidirectional link, the main link of the port has both a transmitter side and a receiver side.

Logical layer control frame (logical layer control frame, LLCF): is a special code pattern used to implement link management functions such as link training and status update. In the present invention, the LLCF is also referred to as CF for short. Therefore, LLCF_TS1 is equivalent to CF_TS1, and LLCF_TS2 is equivalent to CF_TS2.

The technical solutions provided in this application may be applied to a data transmission system including a plurality of data transmission apparatuses. The data transmission apparatus may be a device, a chip used in the device, an interface apparatus, or the like. In the data transmission system, a data transmission apparatus (for example, a data sending apparatus) and a data transmission apparatus (for example, a data receiving apparatus) may be directly connected, or may be indirectly connected through a switching apparatus such as a router. In other words, the plurality of data transmission apparatuses may all be connected to the switching apparatus. In this application, the plurality of data transmission apparatuses may perform data transmission in a wired manner, or may perform data transmission in a wireless manner. In addition, when the plurality of data transmission apparatuses perform data transmission, signal transmission may be directly performed, or signal transmission may be performed by using an interface apparatus.

When the data transmission apparatus is a chip in a device, chips in the data transmission system may be interconnected in a wired or wireless manner. The chip may be a chip in the device, a chip in a docking station, a chip in an adapter, or the like. A gigabit Ethernet port, a video graphics array (video graphics array, VGA), an HDMI, a flash memory (trans flash, TF) card, a secure digital card (secure digital, SD), a charging interface, a USB interface, and the like may be inserted into the docking station.

Optionally, when the data transmission apparatus is a chip, the chip may further include an interface module. In other words, this application may be applied to interface modules for interconnecting chips. The interface module may be understood as an intellectual property (intellectual property, IP) module integrated in the chip. Alternatively, the interface module may be sold as an independent IP module. For example, the chip may be a system on a chip (system on a chip, SoC), a central processing unit (central processing unit, CPU), or a graphics processing unit (graphics processing unit, GPU). The interface module may be an interface module in an SoC, a CPU, a GPU, or the like. Optionally, the interface module may be a transmitter circuit and/or a receiver circuit.

The following uses an example in which the data transmission system includes a plurality of devices to describe a structure of the data transmission device.

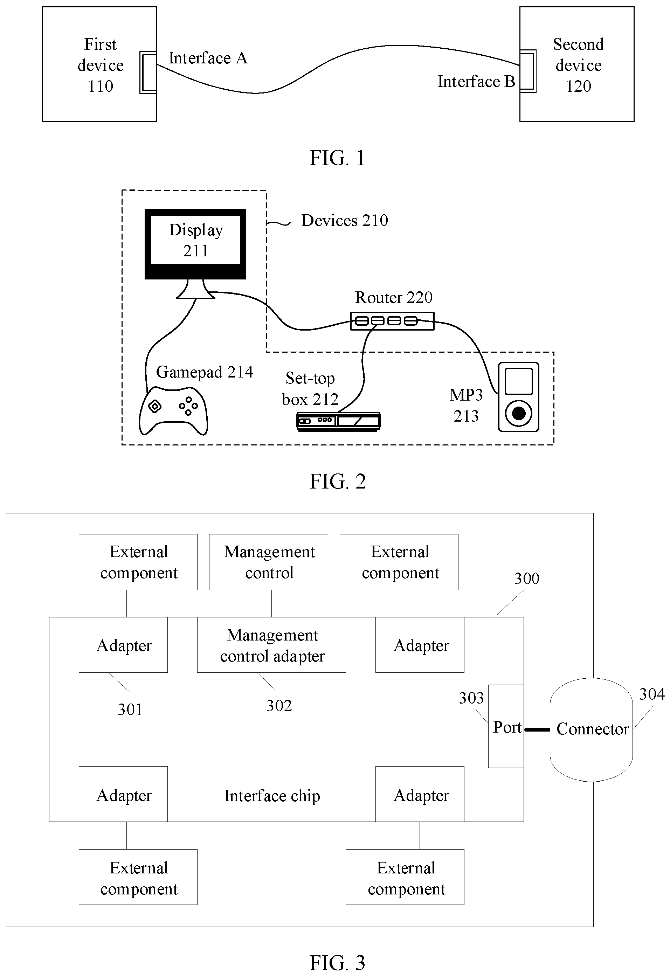

FIG. 1 is a diagram of a structure of a data transmission system according to an embodiment of this application. The data transmission system includes a first device 110 and a second device 120. The first device 110 and the second device 120 are connected in a wired or wireless manner, for example, through a cable. Signal transmission may be performed between the first device 110 and the second device 120, for example, transmission of audio and video data or transmission of a charging signal.

In an example, the first device 110 may be a set-top box, and the second device 120 may be a television. The set-top box and the television may be connected through a cable, and the set-top box may transmit audio and video data to the television through the cable.

In another example, the first device 110 is a display, and the second device 120 is a gamepad. The display and the gamepad may be connected through a cable. The gamepad may transmit control information to the display through the cable.

Optionally, the first device 110 may include an interface A, and the second device may include an interface B. The first device 110 being connected to the second device 120 may be specifically that the interface A of the first device 110 is connected to the interface B of the second device 120. For example, the interface A of the first device 110 is connected to the interface B of the second device 120 through a cable.

FIG. 2 is a diagram of a structure of another data transmission system according to an embodiment of this application. The data transmission system includes a plurality of devices 210 and a router 220. The plurality of devices 210 may be connected to the router 220 in a wired or wireless manner. For example, all the plurality of devices 210 may be connected to the router 220 through a cable. Signal transmission may be performed between any two of the plurality of devices 210 through the router 220, for example, transmission of audio and video data or transmission of a charging signal.

In an example, the plurality of devices 210 may include a display 211, a set-top box 212, and an audio player (for example, an MP3 (Moving Picture Experts Group Audio Layer-3)) 213. The set-top box 212 may transmit audio and video data to the display 211 through the router 220, and the set-top box 212 may further transmit audio data to the audio player 213 through the router 220. In addition, the plurality of devices 210 may include two devices connected to each other. For example, the plurality of devices 210 may further include a gamepad 214, and the gamepad 214 may be connected to the display 211 and transmit control information to the display 211.

Optionally, each of the plurality of devices 210 may include an interface, the router 220 may include a plurality of interfaces, and an interface of each of the plurality of devices 210 may be connected to one of a plurality of interfaces of the router 220. For example, the plurality of devices 210 include a display, a set-top box, a gamepad, and an audio player. The plurality of interfaces of the router 220 include a first interface to a fourth interface. An interface of the display is connected to the first interface of the router 220 through a cable. An interface of the set-top box is connected to the second interface of the router 220 through a cable. An interface of the gamepad is connected to the third interface of the router 220 through a cable. An interface of the audio player is connected to the fourth interface of the router 220 through a cable.

A device in the foregoing system having a data transmission function may be referred to as a communication device. The communication device may be deployed on land, including an indoor or outdoor device, or a handheld or vehicle-mounted device. Alternatively, the communication device may be deployed on a water surface (for example, a ship), or may be deployed in the air (for example, on an airplane, a balloon, or a satellite). The communication device may be used in different scenarios. For example, the communication device may include but is not limited to: a mobile phone (mobile phone), a tablet computer, a notebook computer, a palmtop computer, a mobile internet device (mobile internet device, MID), a camera, a wearable device (such as a smart watch, a smart band, or a pedometer), an audio device, an audio and video player, a set-top box, a game console, a printer, a mouse, a keyboard, a vehicle-mounted device (such as a device on a vehicle, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (such as a refrigerator, a television, an air conditioner, and an electric meter), a smart robot, a workshop device, a wireless terminal in self-driving (self-driving), a wireless terminal in remote medical surgery (remote medical surgery), a wireless terminal in a smart grid (smart grid), a wireless terminal in transportation security (transportation safety), a wireless terminal in a smart city (smart city), a wireless terminal in a smart home (smart home), a flight device (for example, an intelligent robot, a hot air balloon, an unmanned aerial vehicle, or an airplane). Optionally, a signal transmitted between the communication devices may include but is not limited to an audio/video signal, a radio frequency signal, internet of things data, a charging signal, and the like.

In this application, an interface specification used for signal transmission between devices in the data transmission system may include but is not limited to a universal serial bus (universal serial bus, USB) interface specification, a high-definition multimedia interface (high definition multimedia interface, HDMI) specification, a display port (display port, DP) specification, a unified multimedia interconnection (unified multimedia interconnection, UMI) interface specification, a peripheral component interconnect express (peripheral component interconnect express, PCI-Express) interface specification, and the like. Correspondingly, the interface may be an HDMI, a type-C (type-C) interface, or the like.

For example, in the foregoing example, an interface connection manner between the set-top box and the television or an interface connection manner between the game console and the display may be connection through a USB cable, and a compliant interface standard is a USB interface specification; or the connection manner may be connection through an HDMI cable, and a compliant interface standard is an HDMI interface specification.

It may be understood that the interface specification used for signal transmission between devices is merely an example. In actual application, the interface specification may further include any other or future interface specification, for example, a unified media interconnection (unified media interconnection, UMI) interface. This is not specifically limited in embodiments of this application.

In this application, when the device is an electronic device, FIG. 3 is a diagram of basic components of the electronic device. The electronic device includes an interface chip 300 (a unified multimedia interconnection interface). The interface chip 300 includes one or more adapters 301, a management control adapter 302, and one or more ports 303. Alternatively, when the electronic device is a routing device, the interface chip 300 includes only one or more ports 303. Each adapter 301 in the one or more adapters 301 may be coupled to an external component of the interface chip 300. The management control adapter 302 may be coupled to a component other than the interface chip 300 for management and control. The port 303 may be coupled to a connector 304 of the electronic device. The connector 304 is configured to couple to an external device of the electronic device. The one or more adapters 301 may be sending/receiving adapters. For example, when the adapter 301 is configured to perform audio/video format adaptation, the adapter 301 may be an audio/video sending/receiving adapter. When the adapter 301 is configured to perform third-party protocol adaptation, the adapter 301 may be a third-party protocol adapter.

Basic components of different electronic devices may be combined to form a plurality of different device types. For example, the electronic device is a source device that includes at least one downlink port and at least one audio/video sending adapter, or a source device that includes at least one uplink port and one audio/video receiving adapter, or a docking station device that includes at least one uplink port, at least one audio/video receiving adapter, and at least one conventional audio/video interface, or a routing device that includes at least one downlink port and at least one uplink port but has no audio/video sending adapter and no audio/video receiving adapter, or a composite device that has both an uplink port and a downlink port.

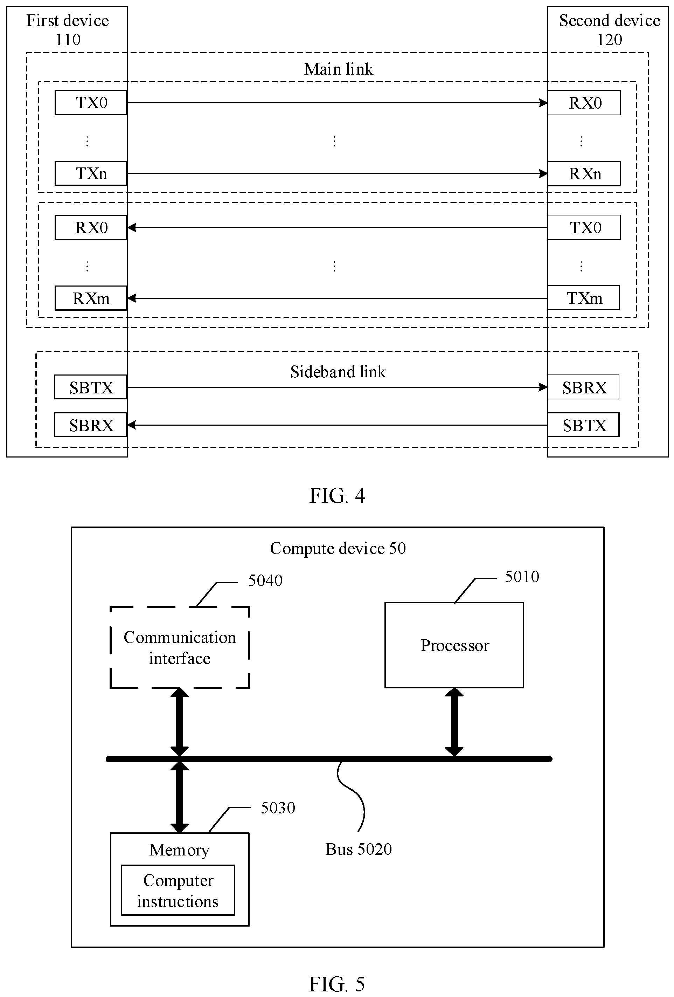

FIG. 4 shows a link lane model according to an embodiment of this application. Links between devices may include a main link and a sideband link.

In a possible embodiment, the main link may include a plurality of lanes, and each lane may support unidirectional transmission. The sideband link may include two unidirectional lanes in different directions. In some other possible embodiments, the main link may include a plurality of lanes, and directions of the lanes may be different. For example, one main link may include a plurality of lanes. For example, a quantity of the plurality of lanes may be 4 or 8. A larger quantity of lanes included in the main link indicates a higher corresponding data transmission speed. For example, as shown in FIG. 4, the main link may include n transmitter lanes TX0 to TXn and m receiver lanes RX0 to RXm, and the sideband link includes a transmitter lane SBTX and a receiver lane SBRX, where n and m are positive integers.

Further, a power bus link (power-bus link, PL) and a cable information link (cableinformation link, CL) may be further included between devices. The cable information link may be used to transmit cable information such as a cable model and cable capability information. The power bus link and the cable information link are not shown in the figure.

For example, the main link mainly implements transmission of an ultra-high definition audio/video signal and high-speed data (for example, USB3). The main link may support bidirectional transmission. There are a plurality of differential lanes (Lane) in each direction. Each differential lane includes one pair of (two) differential lines. Each lane supports only unidirectional transmission. Each differential line includes a transmitter TX and a receiver RX. In this application, TX is a main link transmitter by default, and RX is a main link receiver by default. The main link may also support unidirectional transmission. Each differential lane is a high-speed lane and usually supports a rate of 1 Gbps or higher, such as 2 Gbps, 4 Gbps, 8 Gbps, 10 Gbps, 12 Gbps, 16 Gbps, 20 Gbps, or 24 Gbps.

In the link lane model shown in FIG. 4, a high-speed main link of a device port includes a transmitter link (a link of a transmitter side of the port) for sending data to a peer end, and a receiver link (a link of a receiver side of the port) for receiving data from a peer end. A port transmitter link (also referred to as a logical sublayer transmitter link, TX_Link) includes all TX lanes of the port, and a port receiver link (also referred to as a logical sublayer receiver link, RX_Link) includes all RX lanes of the port.

The sideband link supports bidirectional transmission and includes two single-ended lanes in different directions. Each single-ended lane includes a line. Each line includes a sideband link transmitter (Sideband Link Transmitter, SLTX) and a sideband link receiver (Sideband Link Receiver, SLRX). The sideband link transmits low-speed data (for example, control data, used for management and control between devices, such as device discovery, capability query, device configuration, and device control) through a single-ended lane. Each single-ended lane is a low-speed lane and supports a rate less than 1 Gbps, for example, 12.5 Mbps. The sideband link may be in an always-on state because a supported rate is relatively low and power consumption is low.

Meanings of the high-speed lane, the high-speed differential lane, and the differential lane described in this application are the same, and are all high-speed lanes of the main link. Meanings of the low-speed lane, the single-ended lane, and the low-speed single-ended lane described in this application are the same, and are all low-speed lanes of the sideband link. Subsequent content is not described one by one again.

It should be noted that entering/exiting a low-power state described in this application means that a lane in a main link enters/exits the low-power state. Further, in a data transmission process, when the main link is available, the main link is preferentially used for data transmission.

The following describes the solutions provided in embodiments of this application in detail with reference to accompanying drawings.

In one aspect, an embodiment of this application provides a diagram of a structure of a compute device 50. The compute device 50 may implement functions of the first device 110 or the second device 120 shown in FIG. 1.

As shown in FIG. 5, the compute device 50 may include a processor 5010, a bus 5020, a memory 5030, and a communication interface 5040. The processor 5010, the memory 5030, and the communication interface 5040 are connected through the bus 5020.

It should be understood that, in this embodiment, the processor 5010 may be a central processing unit (central processing unit, CPU), or the processor 3010 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like.

Alternatively, the processor 5010 may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 5040 is configured to implement communication between the compute device 50 and an external device or component.

The bus 5020 may include a path for transmitting information between the foregoing components (for example, the processor 5010 and the memory 5030). In addition to a data bus, the bus 5020 may further include a power bus, a control bus, a status signal bus, and the like. However, for clear description, various types of buses in the figures are marked as the bus 5020. The bus 5020 may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses 5020 may be classified into an address bus, a data bus, a control bus, and the like.

In an example, the compute device 50 may include a plurality of processors. The processor may be a multi-core (multi-CPU) processor. The processor herein may be one or more devices, circuits, and/or compute units configured to process data (for example, computer program instructions).

It should be noted that, in FIG. 5, only an example in which the compute device 50 includes one processor 5010 and one memory 5030 is used. Herein, the processor 5010 and the memory 5030 each indicate a type of component or device. In a specific embodiment, a quantity of components or devices of each type may be determined based on a service requirement.

The memory 5030 may be a volatile memory pool or a non-volatile memory pool, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the processor 5010 may implement the following functions by running or executing a software program and/or a module stored in the memory 5030:
sending a first low-power request message to a second device, where the first low-power request message includes a first low-power request mode, a first low-power request direction, and a low-power request gear, the first low-power request mode is entering low power, and the first low-power request direction includes unidirectional or bidirectional; and receiving, from the second device, acknowledgment/negative acknowledgment information corresponding to the first low-power request message.

For example, the processor 5010 may implement the following functions by running or executing a software program and/or a module stored in the memory 5030:
receiving a first low-power request message from a first device, where the first low-power request message includes a first low-power request mode, a first low-power request direction, and a low-power request gear, the first low-power request mode is entering low power, and the first low-power request direction includes unidirectional or bidirectional; and sending, to the first device, acknowledgment/negative acknowledgment information corresponding to the first low-power request message.

For example, the processor 5010 may implement the following functions by running or executing a software program and/or a module stored in the memory 5030:
sending a second low-power request message to the second device through a sideband link, where the second low-power request message includes a second low-power request mode and a second low-power request direction, the second low-power request mode is exiting low power, and the second low-power request direction includes unidirectional or bidirectional; and receiving, from the second device through the sideband link, acknowledgment/negative acknowledgment information corresponding to the second low-power request message.

For example, the processor 5010 may implement the following functions by running or executing a software program and/or a module stored in the memory 5030:
receiving a second low-power request message from the first device through a sideband link, where the second low-power request message includes a second low-power request mode and a second low-power request direction, the second low-power request mode is exiting low power, and the second low-power request direction includes unidirectional or bidirectional; and sending, to the first device through the sideband link, acknowledgment/negative acknowledgment information corresponding to the second low-power request message.

For example, the processor 5010 may implement the following functions by running or executing a software program and/or a module stored in the memory 5030:
controlling a transmitter link in a main link of the first device to exit a low-power state; sending one or more second control frames to the second device, where the second control frame is used by a transmitter side to wake up a high-speed link line, and different lane rates correspond to different second-control-frame payloads; and continuously sending a first control frame to perform link recovery.

For example, the processor 5010 may implement the following functions by running or executing a software program and/or a module stored in the memory 5030:
receiving one or more second control frames from the first device, where the second control frame is used by the transmitter side to wake up the high-speed link line, and different lane rates correspond to different second-control-frame payloads; and controlling a receiver link in a main link of the second device to exit the low-power state.

In another aspect, an embodiment of this application provides a method for managing a low-power state. The method is used to enter a low-power state. The method may be applied to a data transmission system including a first device and a second device. For example, the method may be applied to the data transmission system shown in FIG. 1 or FIG. 2. This method is used to enter the low-power state.

Further, managing a low-power state described in this application is a process of managing a low-power state of a main link (ML) between devices.

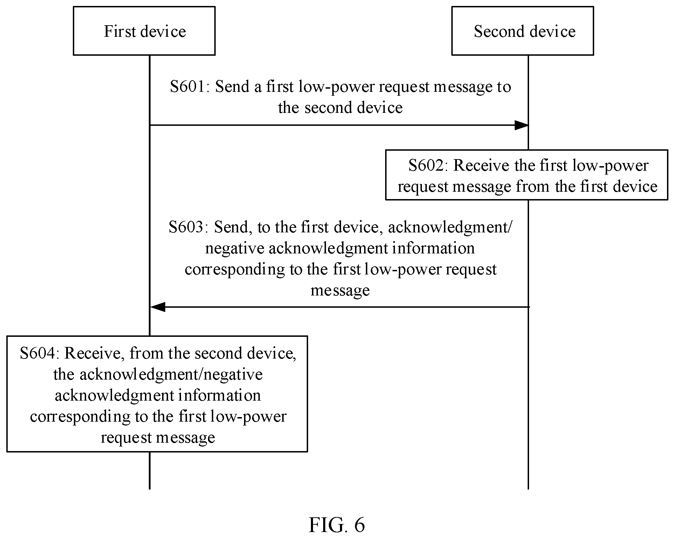

As shown in FIG. 6, the method for managing a low-power state to enter the low-power state provided in this application may include the following steps.

S601: The first device sends a first low-power request message to the second device.

The first low-power request message includes a first low-power request mode, a first low-power request direction, and a low-power request gear.

Specifically, the low-power request mode indicates whether a purpose of the low-power request message is to enter low power or exit low power. For example, the first low-power request mode is entering low power.

The low-power request direction indicates whether the low-power request message is used to request a transmitter link (unidirectional) of a main link of the first device to enter low power, or request a transmitter link and a receiver link (bidirectional) of a main link of the first device to enter low power. The first low-power request direction includes unidirectional or bidirectional.

The first low-power request direction is unidirectional, and is used to request a unidirectional link (the transmitter link of the first device) to enter the low-power state. The first low-power request direction is bidirectional, and is used to request a port to enter a low-power state, that is, a transmitter link and a receiver link of the port to enter the low-power state.

The low-power request gear indicates the low-power state to be entered. The low-power state is a link state in which power consumption can be reduced.

For example, the low-power request gear may include one or more of the following: a low-power level at which a receiver side does not support a control frame-based wakeup capability; or a low-power level at which a receiver side supports a control frame-based wakeup capability. The low-power level may be configured based on an actual requirement. Content of the low-power level is not limited in this embodiment of this application.

Further, in order that the receiver link supports a wakeup frame-based wakeup capability, a related circuit needs to be designed. The circuit can sense a low-amplitude signal. Specific implementation of the circuit is not limited in this embodiment of this application.

Specifically, when determining that a service of the first device is idle, the first device may perform the process of S601. In a process of performing S601, a process of determining the low-power state to be entered and the low-power request direction may be configured based on an actual requirement. This is not limited in this embodiment of this application.

For example, the first device determines that the transmitter link (or the transmitter link and the receiver link) of the first device is idle in service, and may enter a low-power state of a specific level, to reduce power consumption. In this case, the first device performs the process of S601, the first low-power request direction is a direction of a link idle in service, and the low-power level is a low-power state corresponding to traffic.

Further, the first low-power request message may be packaged as a logical layer main link management packet or a logical layer sideband link management packet for transmission.

For example, the first low-power request message may be packaged as the logical layer main link management packet or the logical layer sideband link management packet, and then transmitted in a manner of transmitting the logical layer main link management packet or the logical layer sideband link management packet in an interface protocol. This transmission process is not limited in this embodiment of this application.

It should be noted that the request message (for example, the low-power request message) and the acknowledgment/negative acknowledgment information described in this application may be packaged as the logical layer main link management packet or the logical layer sideband link management packet for transmission.

S602: The second device receives the first low-power request message from the first device.

The first low-power request message received by the second device in S602 is the first low-power request message sent by the first device to the second device in S601. Details are not described herein again.

S603: The second device sends, to the first device, acknowledgment/negative acknowledgment information corresponding to the first low-power request message.

The acknowledgment/negative acknowledgment information corresponding to the first low-power request message indicates that the second device acknowledges the first low-power request message, that is, the second device agrees with content requested in the first low-power request message.

For example, when a target link (a link that is requested by the first low-power request message to enter the low-power state) supports the low-power level in the first low-power request message, the second device performs S603 to send, to the first device, the acknowledgment/negative acknowledgment information corresponding to the first low-power request message. Content and a format of the acknowledgment/negative acknowledgment information is not limited in this embodiment of this application, and may be configured based on an actual requirement.

S604: The first device receives, from the second device, the acknowledgment/negative acknowledgment information corresponding to the first low-power request message.

The acknowledgment/negative acknowledgment information that corresponds to the first low-power request message and that is received by the first device in S604 is the acknowledgment/negative acknowledgment information that corresponds to the first low-power request message and that is sent by the second device to the first device in S603. Details are not described herein again.

According to the solution provided in this application, devices at two ends of a link negotiate, by using a low-power request message, to enter low power; indicate, by using a low-power request gear, a low-power state to be entered; and indicate, by using a low-power request solution, a link direction for entering the low-power state. In this low-power management solution, a plurality of different low-power states can be entered by using one request message. In addition, this solution can be applied to low-power management in different link directions, to flexibly support management of the low-power state in various scenarios.

Further, a link between the first device and the second device includes a main link and a sideband link. The main link is a bidirectional link from the first device to the second device, or the main link is a unidirectional transmitter link from the first device to the second device. The sideband link is a bidirectional link. A transmission rate of transmitting service data through the main link is greater than that of transmitting service data through the sideband link. In a process of interaction between the first device and the second device, when the main link between the first device and the second device is available, the main link is preferentially used to transmit data.

In a possible implementation, the main link between the first device and the second device is a bidirectional transmitter/receiver link, and the foregoing processes from S601 to S604 are all performed on the main link.

In another possible implementation, the main link between the first device and the second device is a unidirectional transmitter link, that is, a pure unidirectional link on which the first device sends data to the second device. The foregoing processes S601 and S602 are performed on the main link. In S603, the second device sends, through the sideband link, the acknowledgment/negative acknowledgment information corresponding to the first low-power request message. In S604, the first device receives the acknowledgment/negative acknowledgment information from the second device through the sideband link. Management of a low-power state of a unidirectional link is implemented.

Further, based on the method for managing a low-power state shown in FIG. 6, because the second device sends the acknowledgment/negative acknowledgment information of the first low-power request to the first device, it indicates that the second device has agreed to a request for entering low power, and therefore, a link corresponding to the request for entering the low-power state may enter the low-power state.

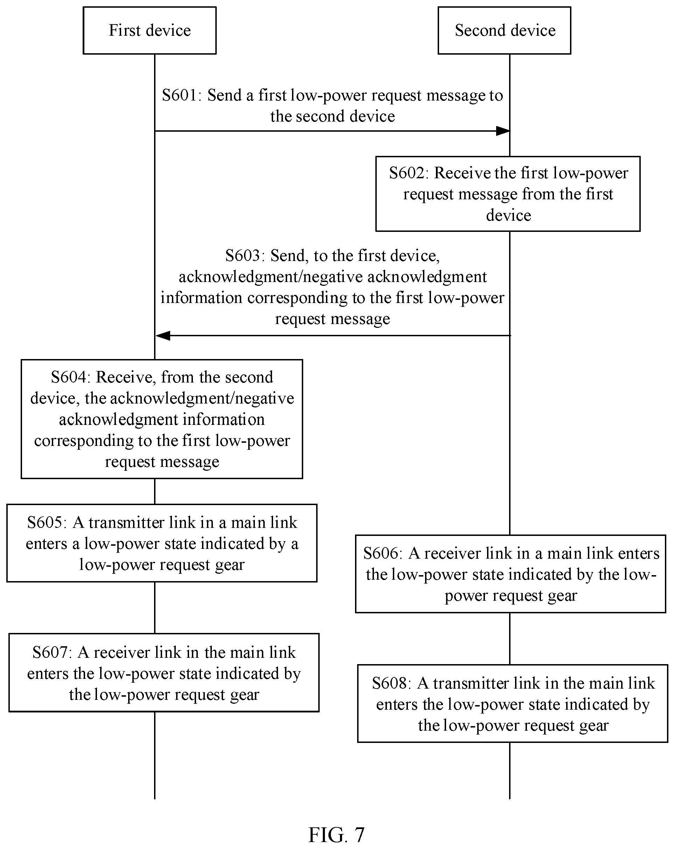

In a possible implementation, if the first low-power request direction is unidirectional, after S604, the transmitter link in the main link of the first device and a receiver link in a main link of the second device enter the low-power state. As shown in FIG. 7, the method for managing a low-power state provided in this embodiment of this application may further include S605 and S606.

S605: The transmitter link in the main link of the first device enters the low-power state indicated by the low-power request gear.

S606: The receiver link in the main link of the second device enters the low-power state indicated by the low-power request gear.

Specifically, that a specific link enters a low-power state means that all lanes in the link enter the low-power state.

Further, the lane entering the low-power state may be adjusting power supply to a transmitter (TX) or a receiver (RX) of the lane to power supply corresponding to the low-power state to be entered. A specific process in which the lane enters the low-power state is not described in this embodiment of this application.

Further, if the first low-power request direction is bidirectional, after S604, the transmitter link and the receiver link in the main link of the first device and the transmitter link and the receiver link in the main link of the second device all enter the low-power state. As shown in FIG. 7, the method for managing a low-power state provided in this embodiment of this application may further include S607 and S608.

S607: The receiver link in the main link of the first device enters the low-power state indicated by the low-power request gear.

S608: The transmitter link in the main link of the second device enters the low-power state indicated by the low-power request gear.

In another aspect, an embodiment of this application provides a method for managing a low-power state to exit the low-power state. The method is used to exit the low-power state in which a receiver side does not support a control frame-based wakeup capability. The method may be applied to a data transmission system including a first device and a second device. For example, the method may be applied to the data transmission system shown in FIG. 1 or FIG. 2. A link between the first device and the second device includes a main link and a sideband link.

In a low-power state corresponding to a low-power level at which the receiver side does not support the control frame-based wakeup capability, a main link between devices does not support data transmission, and data transmission between the two devices may be performed through a sideband link.

Specifically, when the first device determines that a service of the first device needs more links for transmission, some links in the low-power state need to be recovered. A TX side device (for example, the first device or the second device) of the link that needs to be recovered may perform the method for managing a low-power state to exit the low-power state provided in this embodiment of this application.

In a possible implementation, the method for managing a low-power state to exit the low-power state provided in this embodiment of this application may be applied to the entered low-power state in any solution of entering the low-power state, and is not limited to the process shown in FIG. 6 or FIG. 7.

In another possible implementation, the method for managing a low-power state to exit the low-power state provided in this embodiment of this application may be applied to the process shown in FIG. 6 or FIG. 7, to exit the entered low-power state in the process shown in FIG. 6 or FIG. 7.

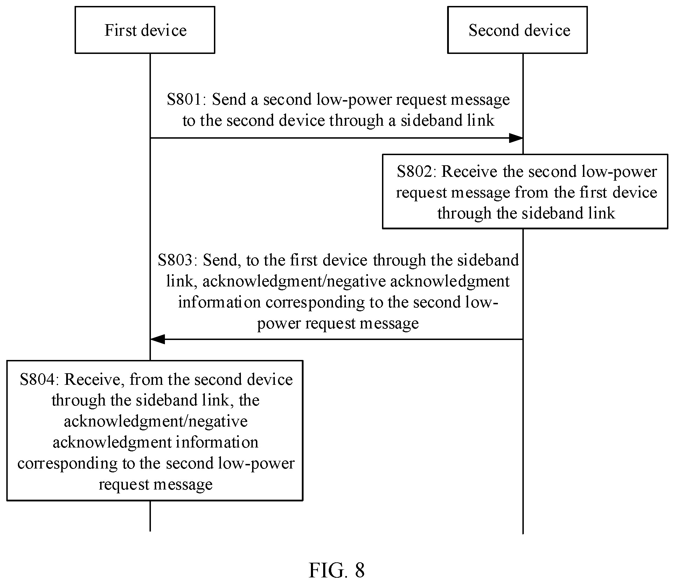

As shown in FIG. 8, a method for managing a low-power state to exit the low-power state provided in this embodiment of this application may include the following steps.

S801: A first device sends a second low-power request message to a second device through a sideband link.

The second low-power request message includes a second low-power request mode and a second low-power request direction. The second low-power request mode is exiting low power, and the second low-power request direction may include unidirectional or bidirectional.

The second low-power request direction is unidirectional, and is used to request a unidirectional link (a transmitter link of the first device) to exit a low-power state. The second low-power request direction is bidirectional, and is used to request a port to exit a low-power state, that is, a transmitter link and a receiver link of the port to exit the low-power state.

The second low-power request direction may be determined based on a service requirement. In a process of performing S801, a process of determining a request direction for exiting low power may be configured based on an actual requirement. This is not limited in this embodiment of this application.

In a possible implementation, the second low-power request message is used to exit the entered low-power state in the process shown in FIG. 6 or FIG. 7. The first low-power request direction is unidirectional, and the second low-power request direction is unidirectional.

In another possible implementation, the second low-power request message is used to exit the entered low-power state in the process shown in FIG. 6 or FIG. 7. The first low-power request direction is bidirectional, and the second low-power request direction is unidirectional.

In still another possible implementation, the second low-power request message is used to exit the entered low-power state in the process shown in FIG. 6 or FIG. 7. The first low-power request direction is bidirectional, and the second low-power request direction is bidirectional.

S802: The second device receives the second low-power request message from the first device through the sideband link.

The second low-power request message received by the second device in S802 is the second low-power request message sent by the first device to the second device in S801. Details are not described herein again.

S803: The second device sends, to the first device through the sideband link, acknowledgment/negative acknowledgment information corresponding to the second low-power request message.

The acknowledgment/negative acknowledgment information corresponding to the second low-power request message indicates that the second device acknowledges the second low-power request message, that is, the second device agrees with content requested in the second low-power request message.

For example, when a target link (a link that is requested by the second low-power request message to exit the low-power state) supports exiting the low-power state, the second device performs S803 and sends, to the first device, the acknowledgment/negative acknowledgment information corresponding to the second low-power request message. Content and a format of the acknowledgment/negative acknowledgment information is not limited in this embodiment of this application, and may be configured based on an actual requirement.

S804: The first device receives, from the second device through the sideband link, the acknowledgment/negative acknowledgment information corresponding to the second low-power request message.

The acknowledgment/negative acknowledgment information that corresponds to the second low-power request message and that is received by the first device in S804 is the acknowledgment/negative acknowledgment information that corresponds to the first low-power request message and that is sent by the second device to the first device in S803. Details are not described herein again.

Through the solution provided in this application, in a scenario in which wakeup by using a wakeup frame is not supported, the low-power request message is transmitted through the sideband link to exit the low-power state, to more flexibly manage the low-power state.

Further, based on the method for managing a low-power state shown in FIG. 8, because the second device sends the acknowledgment/negative acknowledgment information of the second low-power request to the first device, it indicates that the second device has agreed to a request for exiting low power, and therefore, a link corresponding to the second low-power request may exit the low-power state.

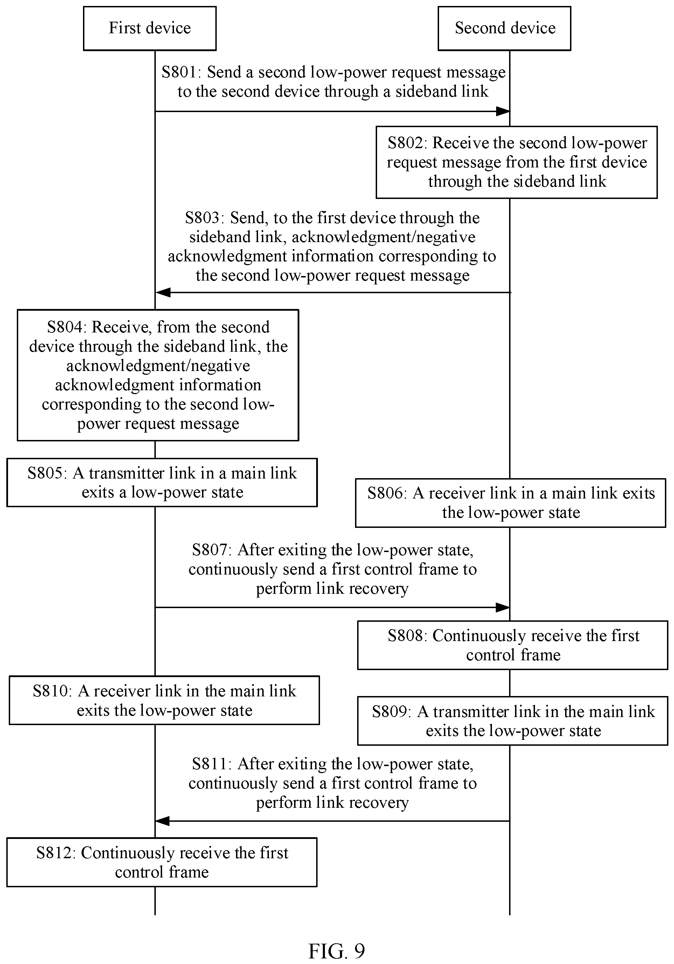

In a possible implementation, if the second low-power request direction is unidirectional, after S804, a transmitter link in a main link of the first device and a receiver link in a main link of the second device exit the low-power state. As shown in FIG. 9, the method for managing a low-power state provided in this embodiment of this application may further include S805 to S808.

S805: The transmitter link in the main link of the first device exits the low-power state.

Further, a lane exiting the low-power state may be recovering power supply to a transmitter (TX) or a receiver (RX) of the lane. A specific process in which the lane exits the low-power state is not described in this embodiment of this application.

S806: The receiver link in the main link of the second device exits the low-power state.

S807: After the transmitter link in the main link of the first device exits the low-power state, the first device continuously sends a first control frame to perform link recovery.

Specifically, in S807, the first device continuously sends the first control frame through each lane of the transmitter link in the main link of the first device to perform link recovery.

The first control frame is used for lane training. For example, the first control frame may be a logical layer training sequence.

In a possible implementation, the first control frame includes a logical layer training sequence 0 (Control Frame, Training Sequence 0, LLCF_TS0), a logical layer training sequence 1 (Control Frame, Training Sequence 1, LLCF_TS1), and a logical layer training sequence 2 (Control Frame, Training Sequence 2, LLCF_TS2), to perform complete lane training.

LLCF_TS0 is used for clock locking in a training phase; LLCF_TS1 is used for channel parameter optimization calculation in the training phase; and LLCF_TS2 is used to confirm a synchronization status between the transmitter side and the receiver side. A format and content of the first control frame are not limited in this embodiment of this application.

In another possible implementation, the first control frame is LLCF_TS2. Continuously sending the first control frame to perform link recovery includes: continuously sending the first control frame to perform lane locking; and after lane locking succeeds, performing multi-lane alignment. In other words, the first control frame is used for quick recovery.

For example, a specified quantity of first control frames indicate that the lane locking succeeds.

S808: The second device continuously receives the first control frame.

In the processes of S807 and S808, the transmitter link in the main link of the first device and the receiver link in the main link of the second device are recovered to enter a high-speed state (or a high-speed transmission state, or a service transmission state). In other words, the main link used by the first device to send data to the second device is recovered for use.

Further, if the second low-power request direction is bidirectional, after S804, the transmitter link and the receiver link in the main link of the first device and the transmitter link and the receiver link in the main link of the second device all exit the low-power state. As shown in FIG. 9, the method for managing a low-power state provided in this embodiment of this application may further include S809 to S812.

S809: The transmitter link in the main link of the second device exits the low-power state.

S810: The receiver link in the main link of the first device exits the low-power state.

S811: After the transmitter link in the main link of the second device exits the low-power state, the second device continuously sends a first control frame to perform link recovery.

S812: The first device continuously receives the first control frame.

In the processes of S811 and S812, the transmitter link in the main link of the second device and the receiver link in the main link of the first device are recovered to enter a high-speed state (or a high-speed transmission state, or a service transmission state). In other words, the main link used by the first device to receive data from the second device is recovered for use.

In still another aspect, an embodiment of this application provides a method for managing a low-power state. The method is used to exit the low-power state in which a receiver side does not support a control frame-based wakeup capability. The method may be applied to a data transmission system including a first device and a second device. For example, the method may be applied to the data transmission system shown in FIG. 1 or FIG. 2. A link between the first device and the second device includes a main link and a sideband link.

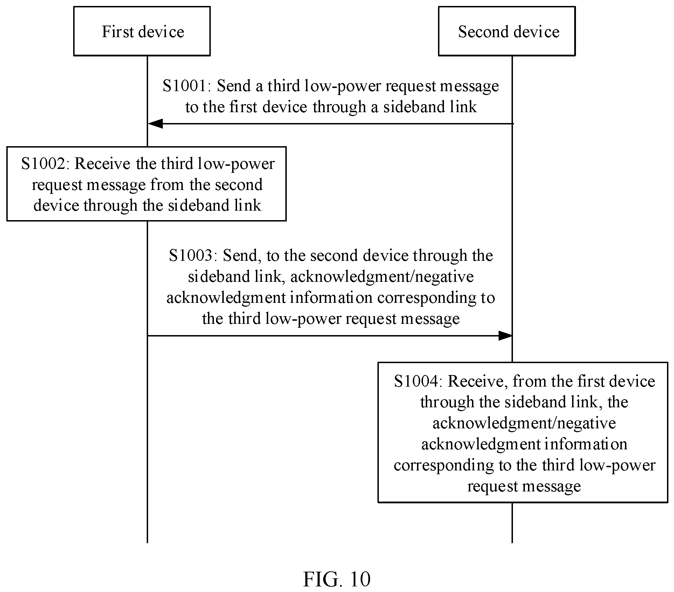

The method for managing a low-power state to exit the low-power state provided in this embodiment of this application may be applied to the process shown in FIG. 6 or FIG. 7, to exit the entered low-power state in the process shown in FIG. 6 or FIG. 7. A first low-power request direction is bidirectional. The method is similar to the process shown in FIG. 8 or FIG. 9. A difference lies in that the second device initiates a request for exiting low power. As shown in FIG. 10, a method for managing a low-power state to exit the low-power state provided in this embodiment of this application may include the following steps.

S1001: A second device sends a third low-power request message to a first device through a sideband link.

The third low-power request message includes a third low-power request mode and a third low-power request direction. The third low-power request mode is exiting low power, and the third low-power request direction is bidirectional.

S1002: The first device receives the third low-power request message from the second device through the sideband link.

S1003: The first device sends, to the second device through the sideband link, acknowledgment/negative acknowledgment information corresponding to the third low-power request message.

S1004: The second device receives, from the first device through the sideband link, the acknowledgment/negative acknowledgment information corresponding to the third low-power request message.

It should be noted that the process shown in FIG. 10 is similar to the process shown in FIG. 8. For specific implementation, refer to the process shown in FIG. 8. Details are not described herein again.

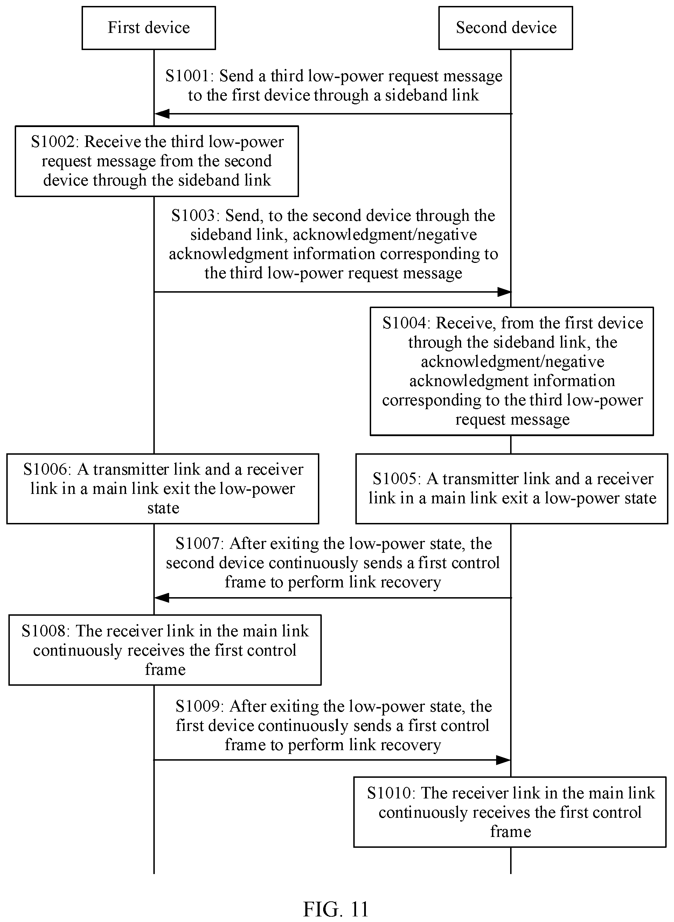

Further, based on FIG. 10, as shown in FIG. 11, a method for managing a low-power state to exit the low-power state provided in this embodiment of this application may include S1005 to S1010.

S1005: A transmitter link and a receiver link in a main link of the second device exit the low-power state.

S1006: A transmitter link and a receiver link in the main link of the first device exit the low-power state.

S1007: After the transmitter link in the main link of the second device exits the low-power state, the second device continuously sends a first control frame to perform link recovery.

S1008: The receiver link in the main link of the first device continuously receives the first control frame.

S1009: After the transmitter link in the main link of the first device exits the low-power state, the first device continuously sends a first control frame to perform link recovery.

S1010: The receiver link in the main link of the second device continuously receives the first control frame.

In this way, the transmitter link and the receiver link in the main link of the first device and the transmitter link and the receiver link in the main link of the second device are recovered to enter a high-speed state (or a high-speed transmission state, or a service transmission state). In other words, the main link used by the first device to send data to the second device and receive data from the second device is recovered for use.

In still another aspect, an embodiment of this application provides another method for managing a low-power state to exit the low-power state. The method is used to exit the low-power state in which a receiver side supports a control frame-based wakeup capability. The method may be applied to a data transmission system including a first device and a second device. For example, the method may be applied to the data transmission system shown in FIG. 1 or FIG. 2.

In a low-power state corresponding to a low-power level at which the receiver side supports the control frame-based wakeup capability, a main link between devices supports data transmission, and data transmission between the two devices may be performed through a main link.

Specifically, when the first device determines that a service of the first device needs more links for transmission, some links in the low-power state need to be recovered. A TX side device (for example, the first device or the second device) of the link that needs to be recovered may perform the method for managing a low-power state to exit the low-power state provided in this embodiment of this application.

In a possible implementation, the method for managing a low-power state to exit the low-power state provided in this embodiment of this application may be applied to the entered low-power state in any solution of entering the low-power state, and is not limited to the process shown in FIG. 6 or FIG. 7.

In another possible implementation, the method for managing a low-power state to exit the low-power state provided in this embodiment of this application may be applied to the process shown in FIG. 6 or FIG. 7, to exit the entered low-power state in the process shown in FIG. 6 or FIG. 7.

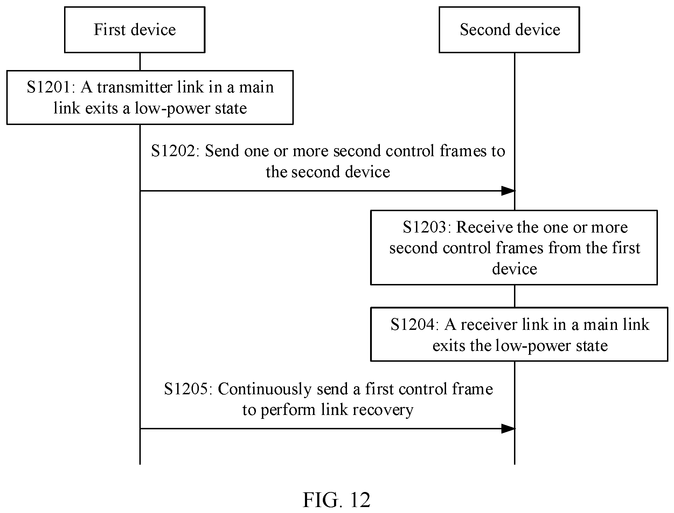

As shown in FIG. 12, a method for managing a low-power state to exit the low-power state provided in this embodiment of this application may include the following steps.

S1201: A transmitter link in a main link of a first device exits a low-power state.

S1202: The first device sends one or more second control frames to the second device.

The second control frame is used by a transmitter side to wake up a high-speed link line. Different lane rates correspond to different second-control-frame payloads.

For example, the second control frame may be a logical layer electrical idle exit frame (Control Frame, Electrical Idle Exit, LLCF_EIE). Content and a format of the second control frame are not limited in this embodiment of this application.

For example, the first device may send N_EIE second control frames to the second device. N_EIE is a defined quantity of second control frames sent during link training.

S1203: The second device receives the one or more second control frames from the first device.

S1204: A receiver link in a main link of the second device exits the low-power state.

S1205: The first device continuously sends a first control frame to perform link recovery.

The second device completes link recovery with the first device by continuously receiving the first control frame.

Through the solution provided in this application, for a low-power state that supports wakeup by using a wakeup frame, the first device may exit low power by sending the wakeup frame; and configure, at different lane rates, different second-control-frame payloads used for wakeup, so that a peer end can determine a lane rate based on a control-frame payload, and complete lane recovery more quickly based on the lane rate to exit the low-power state, thereby improving efficiency of low-power management.

Further, content of the second-control-frame payload may be configured based on an actual requirement. This is not limited in this embodiment of this application.

For example, when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times; when a lane rate is HS2 (6 Gbps/8 Gbps), a payload length of a second control frame is 32 bytes, and a payload is fixedly 0x0000_0000_FFFF_FFFF repeated four times; when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

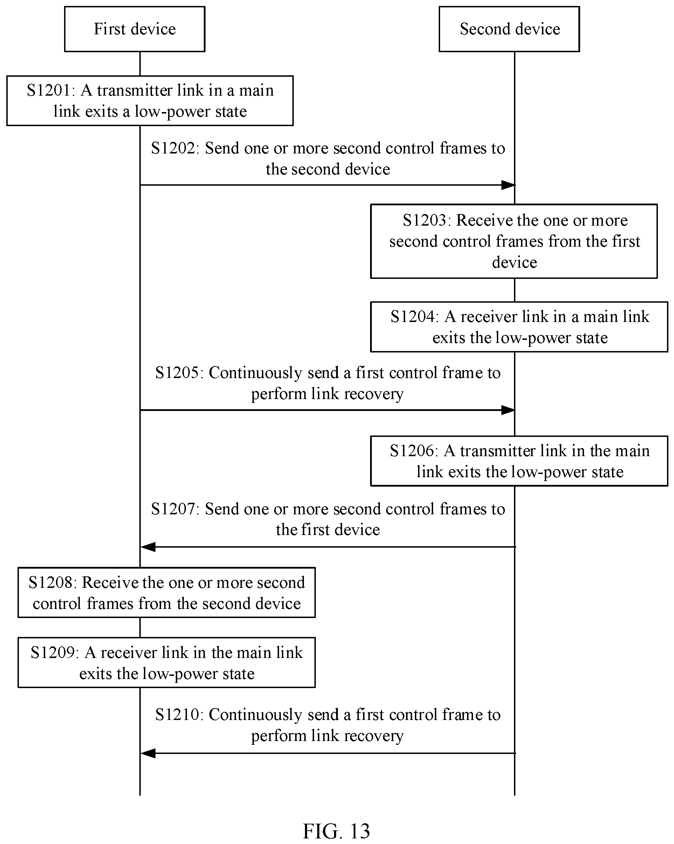

Further, the second control frame is used to wake up a unidirectional link. If the transmitter link in the main link of the second device also needs to be recovered, as shown in FIG. 13, the method for managing a low-power state to exit the low-power state provided in this embodiment of this application may include S1206 to S1210.

S1206: The transmitter link in the main link of the second device exits the low-power state.

S1207: The second device sends one or more second control frames to the first device.

S1208: The first device receives the one or more second control frames from the second device.

S1209: The receiver link in the main link of the first device exits the low-power state.

S1210: The second device continuously sends a first control frame to perform link recovery.

The first device completes link recovery with the second device by continuously receiving the first control frame.

The foregoing embodiment describes a process of managing the low-power state. The following describes an example of content related to the foregoing embodiment, but does not constitute specific limitation.

A process of transmitting logical layer data is first described by using an example.

A logical layer main link (Main Link, ML) uses two types of code patterns to implement data processing and link management functions. A first type is LLB. The LLB is used as a basic unit to transmit transport layer data and a logical layer management message. A second type is LLCF, to implement link management functions such as link training and status update. For the LLB, bandwidth of all lanes is used for transmission, and is evenly allocated to all enabled lanes for transmission. For the LLCF, an independent lane is used for transmission to ensure integrity of an LLCF code pattern on a single lane.

The transport layer data and the logical layer management message need to be packaged into a data packet structure. The transport layer data and different management messages are distinguished based on a data packet type.

The logical layer data packet (Logical Layer Data Packet, LLDP) implements packaging of the transport layer data. The LLDP can be transmitted only through an ML.

The logical layer management packet implements packaging of the logical layer management message, and includes a logical layer main link management packet (Logical Layer Main Link Management Packet, LLMMP) and a logical layer sideband link management packet (Logical Layer Sideband Link Management Packet, LLSMP). The LLMMP is transmitted through the ML, and the LLSMP is transmitted through an SL. If the ML exists, it is advised to use the ML to transmit the logical layer management message.

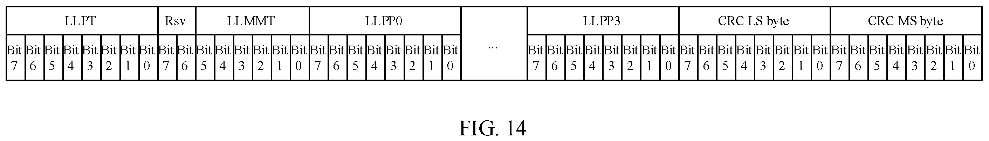

As shown in FIG. 14, a complete LLMMP structure is described. An entire data packet has 8 bytes in total, and includes a logical layer packet header (Logical Layer Packet Header, LLPH), a logical layer packet payload (Logical Layer Packet Payload, LLPP), and a cyclic redundancy check (Cyclic Redundancy Check, CRC) code structure.

A length of the LLPH is fixedly 2 bytes. An LLPT field indicates a current data packet type. An LLMMP is fixedly 0xF0. A Rsv field is a reserved field, and is fixedly 0x0. A logical layer management message type (Logical Layer Management Message Type, LLMMT) field indicates a type of a message carried by the current LLMMP. The length of the LLPP is fixedly 4 bytes. Content of the LLPP is determined by a current to-be-transmitted logical layer management message. If a length of the message is less than 4 bytes, a reserved parameter is filled. The reserved parameter is fixedly 0x0. The CRC is fixedly 2 bytes, and is filled with check information of all parameters in the Rsv field, the LLMMT field, and the LLPP field of the current data packet. A generator polynomial corresponding to the CRC is g(x) = x16 + x12 + x5 + 1.

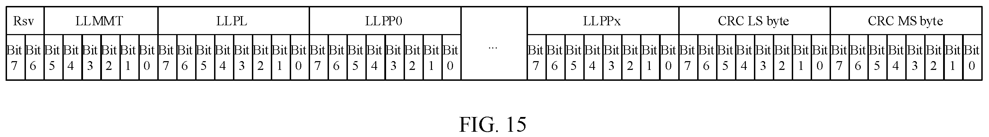

As shown in FIG. 15, a complete LLSMP structure is described. A length of an entire data packet is not fixed. The data packet includes an LLPH structure, an LLPP structure, and a CRC structure. A length of the LLPH is fixedly 2 bytes. A Rsv field and an LLMMT field are consistent with those in an LLMMP. A logical layer packet length (Logical Layer Packet Length, LLPL) field indicates a payload length of a current LLSMP packet. A length and content of the LLPP are determined by a current to-be-transmitted logical layer management message. The CRC is fixedly 2 bytes, and is filled with check information of all parameters in the current data packet except the CRC field.

In FIG. 14 and FIG. 15, a CRC LS byte indicates least significant (least significant, LS), and a CRC MS byte indicates most significant (most significant, MS).

A low-power management request message in this application is a logical layer management message, and may be packaged as an LLMMP or an LLSMP for transmission. The following describes the low-power management request message by using an example.

A low-power request message (Lower Power Request Message, LPRM) is a set of low-power request parameters, including a request for entering/exiting low power, a unidirectional/bidirectional low-power request, and low-power request gear (mandatory when entering a low-power state, and nonexistent when exiting the low-power state).

The LPRM is used when a link is in a service transmission state or an LP3 low-power state (a low-power state in which a receiver side does not support wakeup based on a wakeup frame). In the service transmission state, if no service data or management message needs to be transmitted, a request for entering low power can be initiated. The request for entering low power needs to include the low-power level. In the LP3 low-power state, if service data transmission needs to be restarted, a request for exiting low power can be initiated. A low-power level corresponding to the request for exiting low power needs to be LP3. A current port negotiates with a peer end through an LPRM to control a port link to enter or exit low power.

The LPRM other than LP0f needs to be responded. If the receiver side accepts the low-power request, the receiver side needs to respond with ACK to the LPRM. Otherwise, the receiver side needs to respond with NACK. LP0f does not need to be responded. The peer end is forced to accept an LP0f low-power request. For details about the response, refer to the following description about acknowledgment/negative acknowledgment information.

The LPRM supports transmission through an ML and an SL. Transmission through an ML is recommended for an entering LPRM. Transmission through only an SL can be used for an exiting LPRM. An LLMMP arrangement format corresponding to transmission through an ML is shown in Table 1. LLSMP arrangement corresponding to transmission through an SL is shown in Table 2.

**Table 1**

| Byte | Bit | Field name | Note |
|---|---|---|---|
| 0 | 7:0 | LLPT | Packet type, configured as 0xF0 |
| 1 | 5:0 | LLMMT | Logical layer management message type, configured as 0x21 |
| | 7:6 | Reserved | Reserved field |
| | | | Low-power request gear: |
| | | | 00h: Enter low power LP0 |
| | | | 01h: Enter low power LP1 |
| 2 | 7:0 | LP_GEAR | 02h: Enter low power LP2 |
| | | | 03h: Enter low power LP3 |
| | | | 10h: Enter low power LP0f |
| | | | Other reserved |
| 3 | | | Low-power request mode |
| | 0 | LP_MODE | 0b: Enter |
| | | | 1b: Exit |
| | | | Low-power request direction: |
| | 1 | LP_WAY | 0b: Unidirectional |
| | | | 1b: Bidirectional |
| | 7:2 | Reserved | Reserved field |
| 4-5 | 7:0 | Reserved | Reserved field |
| 6-7 | 7:0 | CRC | Check field, to check bytes 1 to 5 |

**Table 2**

| Byte | Bit | Field name | Note |
|---|---|---|---|
| 0 | 5:0 | LLMMT | Logical layer management message type, configured as 0x21 |
| | 7:6 | Reserved | Reserved field |
| 1 | 7:0 | LLPL | Packet payload length parameter, equal to 2 |
| 2 | 7:0 | LP_GEAR | Low-power request gear: |
| | | | 00h: Enter low power LP0 |
| | | | 01h: Enter low power LP1 |
| | | | 02h: Enter low power LP2 |
| | | | 03h: Enter low power LP3 |
| | | | 10h: Enter low power LP0f |
| | | | Other reserved |
| 3 | 0 | LP_MODE | Low-power request mode: |
| | | | 0b: Enter |
| | | | 1b: Exit |
| | 1 | LP_WAY | Low-power request direction: |
| | | | 0b: Unidirectional |
| | | | 1b: Bidirectional |
| | 7:2 | Reserved | Reserved field |
| 4-5 | 7:0 | CRC | Check field, to check bytes 0 to 3 |

Then, the acknowledgment/negative acknowledgment information is described by using an example.

Acknowledgment/Negative acknowledgment information (ACK/NACK Message, ACK/NACK) is a set of responses to management messages.

ACK/NACK is used when a management message needs to be responded. ACK/NACK is used to respond to received information and feed back a response or a decision result of a current port for the corresponding information.

ACK/NACK does not need to be responded.

ACK/NACK supports transmission through an ML and an SL. An LLMMP arrangement format corresponding to transmission through an ML is shown in Table 3. LLSMP arrangement corresponding to transmission through an SL is shown in Table 4.

**Table 3**

| Byte | Bit | Field name | Note |
|---|---|---|---|
| 0 | 7:0 | LLPT | Packet type, configured as 0xF0 |
| 1 | 5:0 | LLMMT | Logical layer management message type, configured as 0x2A |
| | 7:6 | Reserved | Reserved field |
| 2 | 7:0 | ACK/NACK | Acknowledgment/Negative acknowledgment message |
| | | | 0Fh: ACK |
| | | | F0h: NACK |
| 3 | 5:0 | LLMMT_Ack/Nack | Response type, indicating a specific type of management message to be responded |
| | 7:6 | Reserved | Reserved field |
| 4-5 | 7:0 | Reserved | Reserved field |
| 6-7 | 7:0 | CRC | Check field, to check bytes 1 to 5 |

**Table 4**

| Byte | Bit | Field name | Note |
|---|---|---|---|
| 0 | 5:0 | LLMMT | Logical layer management message type, configured as 0x2A |
| | 7:6 | Reserved | Reserved field |
| 1 | 7:0 | LLPL | Packet payload length parameter, equal to 1 |
| 2 | 7:0 | ACK/NACK | Acknowledgment/Negative acknowledgment message |
| | | | 0Fh: ACK |
| | | | F0h: NACK |
| 3 | 5:0 | LLMMT_Ack/Nack | Response type, indicating a specific type of management message to be responded |
| | 7:6 | Reserved | Reserved field |
| 4-5 | 7:0 | CRC | Check field, to check bytes 0 to 3 |

The following describes a link training start message by using an example.

The link training start message (Training Start Message, TSM) is a set of link training start flags including training start flags of all transmitter lanes of a current port.

The TSM is used when link training is started. Application scenarios include: In an initial link establishment scenario, after port initialization is completed, the TSM is sent to start link training. In an abnormal retraining scenario, the TSM is sent to start link retraining. In a scenario of exiting low power LP3, the TSM is sent to start link recovery. When training or recovery is started, the TSM is sent. After receiving the TSM, a receiver side starts lane training specified by the TSM.

Message parameters of lanes are independent. If a lane is disabled or does not exist, a corresponding message parameter is fixedly filled with 0.

The TSM does not need to be responded. However, a peer end needs to feed back a clock locking feedback message in tTSMResponse.

The TSM supports transmission through an ML and an SL. An LLMMP arrangement format corresponding to transmission through an ML is shown in Table 5. LLSMP arrangement corresponding to transmission through an SL is shown in Table 6.

**Table 5**

| Byte | Bit | Field name | Note |
|---|---|---|---|
| 0 | 7:0 | LLPT | Packet type, configured as 0xF0 |
| 1 | 5:0 | LLMMT | Logical layer management message type, configured as 0x11 |
| | 7:6 | Reserved | Reserved field |
| | 0 | TS0 | Training start, indicating to initiate training of a lane 0 |
| | | | 1b: Training initiated |
| | | | 0b: Training not initiated |
| | 1 | TS1 | Training start, indicating to initiate training of a lane 1 |
| 2 | | | 1b: Training initiated |
| | | | 0b: Training not initiated |
| | 2 | TS2 | Training start, indicating to initiate training of a lane 2 |
| | | | 1b: Training initiated |
| | | | 0b: Training not initiated |
| | 3 | TS3 | Training start, indicating to initiate training of a lane 3 |
| | | | 1b: Training initiated |
| | | | 0b: Training not initiated |
| | 4 | TS4 | Training start, indicating to initiate training of a lane 4 |
| | | | 1b: Training initiated |
| | | | 0b: Training not initiated |
| | 5 | TS5 | Training start, indicating to initiate training of a lane 5 |
| | | | 1b: Training initiated |
| | | | 0b: Training not initiated |
| | 6 | TS6 | Training start, indicating to initiate training of a lane 6 |
| | | | 1b: Training initiated |
| | | | 0b: Training not initiated |
| | 7 | TS7 | Training start, indicating to initiate training of a lane 7 |
| | | | 1b: Training initiated |
| | | | 0b: Training not initiated |
| 3-5 | 7:0 | Reserved | Reserved field |
| 6-7 | 7:0 | CRC | Check field, to check bytes 1 to 5 |

**Table 6**

| Byte | Bit | Field name | Note |
|---|---|---|---|
| 0 | 5:0 | LLMMT | Logical layer management message type, configured as 0x02 |
| | 7:6 | Reserved | Reserved field |
| 1 | 7:0 | LLPL | Packet payload length parameter, equal to 1 |
| 2 | 0 | TS0 | Training start, indicating to initiate training of a lane 0 |
| | | | 1b: Training initiated |
| | | | 0b: Training not initiated |
| | 1 | TS1 | Training start, indicating to initiate training of a lane 1 |
| | | | 1b: Training initiated |
| | | | 0b: Training not initiated |
| | 2 | TS2 | Training start, indicating to initiate training of a lane 2 |
| | | | 1b: Training initiated |
| | | | 0b: Training not initiated |
| | 3 | TS3 | Training start, indicating to initiate training of a lane 3 |
| | | | 1b: Training initiated |
| | | | 0b: Training not initiated |
| | 4 | TS4 | Training start, indicating to initiate training of a lane 4 |
| | | | 1b: Training initiated |
| | | | 0b: Training not initiated |
| | 5 | TS5 | Training start, indicating to initiate training of a lane 5 |
| | | | 1b: Training initiated |
| | | | 0b: Training not initiated |
| | 6 | TS6 | Training start, indicating to initiate training of a lane 6 |
| | | | 1b: Training initiated |
| | | | 0b: Training not initiated |
| | 7 | TS7 | Training start, indicating to initiate training of a lane 7 |
| | | | 1b: Training initiated |
| | | | 0b: Training not initiated |
| 3-4 | 7:0 | CRC | Check field, to check bytes 0 to 2 |

Then, a control frame is described as an example.

The control frame is fully transmitted on a single lane and is used to transmit information such as a link management or training sequence. An insertion location of the control frame is indicated by a logical layer management packet CFSLM. Table 7 shows a frame structure of the control frame. Table 8 shows content of a control frame field.

**Table 7**

| B0 | B1 | B2 | B3 | B4 | B5 | B6 ... (optional) |
|---|---|---|---|---|---|---|
| Frame type | Check | Frame type | Check | Frame type | Check | Payload (optional) |
| Frame header 1 | | Frame header 2 | | Frame header 3 | | Payload (optional) |

In the frame structure of the control frame, frame headers 1, 2, and 3 have same content, to form repetition code.

Unless otherwise specified, the control frame (Frame header + Payload) is not scrambled or precoded.

**Table 8**

| **Field** | **Note** |
|---|---|
| Frame type | Indicate a frame type. Refer to description of Table 5. A length is 1 byte |
| Check | Check bit for the frame type A length is 1 byte |
| | Use CRC-8 with configuration below: |
| | Width: 8 |
| | Poly: 07h |
| | Init: 00h |
| | RefIn: False |
| | RefOut: False |
| | XorOut: 55h |
| | A check bit can support correction of a 1-bit error and detection of a 2-bit error |
| Payload | For information carried in this type of control frame, refer to description of each control frame A length is lengthened |

A frame type, a check, a payload length, and a description of the control frame in this application may be shown in Table 9.

**Table 9**

| **Control frame** | **Frame type** | **Check** | **Payload length** | **Note** |
|---|---|---|---|---|
| LLCF_TS0 | -- | -- | Lengthened | Clock locking sequence, where a payload is a sequence 01 |
| LLCF_TS1 | -- | -- | Lengthened | Training sequence with a payload of PRBS11 |
| LLCF_TS2 | 0x6C | 0x56 | 8 bytes | A payload is a PRBS11 sequence, used to confirm synchronization between a transmitter side and a receiver side |
| LLCF_EI | 0x65 | 0x69 | 0 | Mark an end of frame data |
| LLCF_DS | 0x4B | 0xA3 | 0 | Mark a start of new LLB transmission |
| LLCF_EIE | -- | -- | Lengthened | Used for electrical idle wakeup |
| LLCF_PAD | 0xD2 | 0x65 | Lengthened | Used only for padding, and directly discarded after being received |

LLCF_TS0 is used for clock locking in a training phase, and a payload is 0xAA of any length.

LLCF_TS1 is used for channel parameter optimization calculation in a training phase. A payload is a PRBS11 sequence with any length. A polynomial is G(x) = x11 + x2 + 1. A seed is 00110011001b.

LLCF_TS2 is used to confirm a synchronization status between the transmitter side and the receiver side. A length is fixedly 8 bytes. A payload is bit reversal (bitwise complement) of the PRBS11 sequence. A polynomial is G(x) = x¹¹ + x² + 1. A seed is 00110011001b.

Logical layer electrical idle (Control Frame Electrical Idle, LLCF_EI) is used to mark a transmission end on the lane. Data should be discarded after the transmission end.

A logical layer data start (Control Frame Data Start, LLCF_DS) marks a start location of a new logical block. Logical block data is transmitted just after the LLCF_DS.

LLCF_EIE is used by a transmitter side to wake up a lane through a high-speed link line. Different LLCF_EIEs should be sent at different rates.

When a rate of a single lane is HS1 (2 Gbps/4 Gbps), a payload length is 16 bytes, and a payload is fixedly 0x0000_FFFF_0000_FFFF_0000_FFFF_0000_FFFF, that is, 0x0000_FFFF repeated four consecutive times.

When a rate of a single lane is HS2 (6 Gbps/8 Gbps), a payload length is 32 bytes, and a payload is fixedly 0x0000_0000_FFFF_FFFF repeated four times.

When a rate of a single lane is HS3 (10 Gbps/12 Gbps/16 Gbps), a payload length is 64 bytes, and a payload is fixedly 0x0000_0000_0000_0000_FFFF_FFFF_FFFF_FFFF repeated four times.

When a rate of a single lane is HS4 (20 Gbps/24 Gbps), a payload length is 96 bytes, and a payload is fixedly 0x0000_0000_0000_0000_0000_0000_ FFFF_FFFF_FFFF_FFFF_FFFF_FFFF repeated four times.

A pad logical layer control frame (pad logical layer control frame, LLCF_PAD) is used for padding.

The following describes a power domain and a low-power gear by using examples.

A logical layer divides the power domain into VCC power and VSL power. Specific description is shown in Table 10. The VCC power is used to supply power to a main service function. The VSL power is used to supply power to VCC power management logic, a function related to a sideband link, physical layer calibration, a register for storing equalization and other link training parameters, and another special register that is used for power management and facilitates quick wakeup from LP3.

**Table 10**

| Power domain | Brief description of functions of the power domain |
|---|---|
| VCC power | Main service function |
| VSL power | VCC power management logic |
| | Functions related to a sideband link |
| | Physical layer calibration, and a register for storing equalization and other link training parameters |
| | Another special register that is used for power management and facilitates quick wakeup from LP3 |

The low-power state in this application may be shown in Table 11.

**Table 11**

| Power gear | Power 0 | Power 1 | Power 2 | Power 3 | Power 4 |
|---|---|---|---|---|---|
| Corresponding status of a lane state machine | HS | LPx. LP0 | LPx.LP1 | LPx.LP2 | LPx.LP3 DISABLE |
| High-speed | ON | OFF | OFF | OFF | OFF |

| service transmission | | | | | |
|---|---|---|---|---|---|
| Status overview | High-speed service transmission state | Low-power state | Low-power state | Low-power state | Low-power state |
| | | | | | All functions except a sideband link can be disabled, and the VCC power can be disabled |
| | | | PLL can be disabled, and wakeup is slow | PLL can be disabled, and wakeup is slow | |
| | | Quick wakeup | | | |
| LLCF_EIE-based wakeup capability of a receiver side | NA | ON | ON | ON | OFF |
| VCC power status | ON | ON | ON | ON | ON/OFF |

Compared with Power 2, for Power 3, an analog transmitter side and an analog receiver side can disable more functions to reduce power consumption.

The following describes an example of a related design of LLCF_EIE-based wakeup of the receiver side.

In order that a receiver link supports an LLCF_EIE-based wakeup capability, a related circuit needs to be designed. The circuit can sense a low-amplitude signal, for example, can identify V_{TX-DIFF-PP-IDLE} in Table 12.

**Table 12**

| Parameter name | Symbol | Unit | Value | | |
|---|---|---|---|---|---|
| | | | Minimum value | Typical value | Maximum value |
| Peak-to-peak value of a differential signal in a normal amplitude mode | V_{TX-DIFF-PP} | mV | 800 | 1000 | 1400 |
| Peak-to-peak value of a differential signal in an idle state | V_{TX-DIFF-PP-IDLE} | mV | | | 10 |

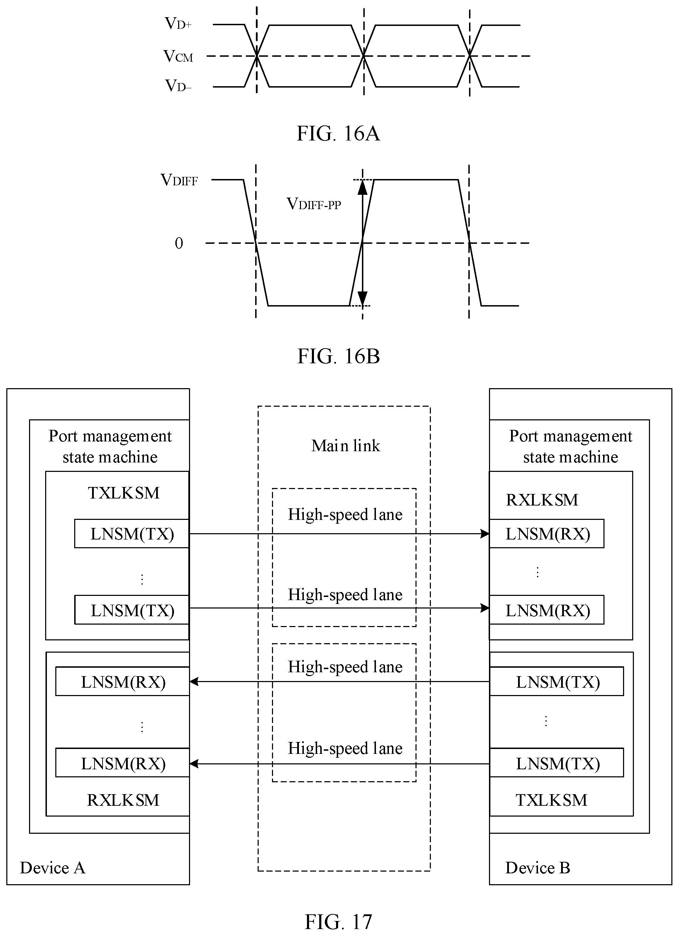

FIG. 16A and FIG. 16B are diagrams of a differential lane signal of a main link. A peak-to-peak value of a differential lane TX signal is shown in FIG. 16A. FIG. 16B is a diagram of a main link differential lane signal. A differential lane signal V_{DIFF(t)} is defined as a voltage difference between a positive signal V_{D+(t)} and a negative signal V_{D-(t)} of a transmission line, that is, V_{DIFF(t)} = V_{D+(t)} - V_{D-(t)}. A peak-to-peak value of a differential lane TX signal V_{TX_DIFF-PP} is defined as V_{TX_DIFF-PP} = max(V_{DIFF}) - min(V_{DIFF}).

The following describes link training and quick recovery by using examples.

For the main link, lane clock recovery and locking, lane equalization, lane locking, and multi-lane alignment are completed through link training (TRAINING). Steps are described as follows:

Clock recovery and locking: A transmitter side (TX lane) of each high-speed differential lane sends a special control frame LLCF_TS0 to a receiver side (RX lane). Parameters (such as a Swing parameter) selected by the transmitter side support the receiver side in completing clock locking.

Lane equalization: The transmitter side of each high-speed differential lane sends a special control frame LLCF_TS1 to the receiver side, and selects an appropriate equalization parameter (for example, the transmitter side selects an appropriate FFE parameter), to improve quality of a signal obtained by the receiver side of each lane.

Lane locking: The transmitter side of each high-speed differential lane sends a special control frame LLCF_TS2 to the receiver side to lock a data boundary of each lane (for example, a start and an end of the control frame can be identified), to further complete synchronization between a transmitter side and a receiver side.

Multi-lane alignment: The transmitter side of each high-speed differential lane sends a special control frame LLCF_DS to the receiver side. After the receiver side receives LLCF_DS, if a skew between LLCF_DSs is less than a preset value, the receiver side may receive data normally, and a transmitter link or a receiver link starts to receive high-speed service data and enters a high-speed link service transmission state (HS).

Quick recovery (Recover) is a quick training state. Compared with a complete link training process, the quick recovery process omits some training steps. For example, in a process of exiting low power, clock recovery and locking, and lane equalization can be omitted. Training starts from lane locking, to enter the high-speed link service transmission state (HS).

The following describes lane status management of a main link.

To maintain a status of the main link, this application defines a lane status management model, as shown in FIG. 17.

A device manages a port state by using a port management state machine. Each port in a unified multimedia interconnection protocol corresponds to one high-speed main link. The high-speed main link of each port includes one transmitter link (a transmitter-side link of the port, including all TX lanes) and one receiver link (a receiver-side link of the port, including all RX lanes). The high-speed main link includes 1 to 8 lanes in total. A state of each link is managed jointly by one transmitter link state machine (Transmitter link state machine, TXLKSM), one receiver link state machine (Receiver link state machine, RXLKSM), and several lane state machines (Lane state machines, LNSMs).

The TXLKSM is a general state machine of a port transmitter link, and is used to generally manage a status of a transmitter link of a port. Each port has a maximum of one TXLKSM.

The RXLKSM is a general state machine of a port receiver link, and is used to generally manage a status of a receiver link of a port. Each port has a maximum of one RXLKSM.

The LNSM is a lane state machine, and is used to manage a status of a lane of a current port. According to an application mode of a lane, the LNSM is classified into a TX mode and an RX mode, that is, LNSM(TX) and LNSM(RX) in FIG. 17 correspondingly.

An LNSM in a TX mode is used to independently manage a status of a TX lane of the current port. Each TX high-speed lane port corresponds to one LNSM(TX). An LNSM in an RX mode is used to independently manage a status of an RX lane of the current port. Each RX high-speed lane port corresponds to one LNSM(RX).

A transmitter link and a receiver link of a port are relatively independent of each other in terms of status and behavior, and are controlled by respective link state machines. A power status and a rate status of the transmitter link may be respectively different from those of the receiver link.

In the transmitter link, different TX lanes are also independent of each other in terms of status and behavior, and are controlled by respective lane state machines. Rate statuses of all TX lanes need to be consistent.

In the receiver link, different RX lanes are also independent of each other in terms of status and behavior, and are controlled by respective lane state machines. Rate statuses of all RX lanes need to be consistent.

A total quantity of lanes of each port is not greater than 8. Therefore, a total quantity of LNSMs is not greater than 8.

Each port needs to report an overall port state based on statuses of the TXLKSM and the RXLKSM.

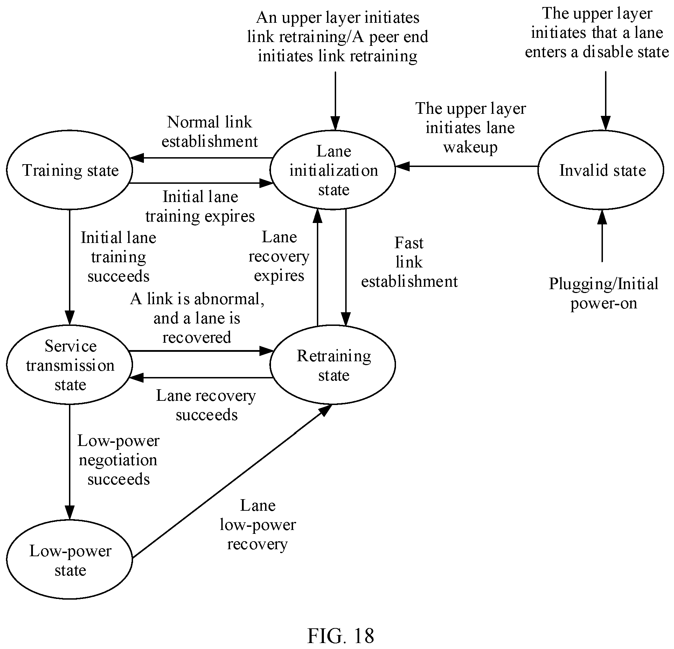

The LNSM is used to independently manage the status of the lane of the current port. The lane can work in the TX mode or the RX mode. State conversion of the lane may be shown in FIG. 18. Brief description of each lane state is shown in Table 13.

**Table 13**

| LNSM status | Status overview |
|---|---|
| Disable | Invalid state |
| | Disable the current lane by an upper layer, an initial power-on state, or a disconnection state |
| | In this state, initial training is not enabled for the lane |
| INIT | Lane initialization state |
| | In this state, initial training is not enabled for the lane, to wait for initialization of the entire lane |
| Training | High-speed lane training state |
| | In this state, initial lane training is performed for the lane, including lane clock recovery and locking, lane equalization, lane locking, and multi-lane deskew |
| HS | High-speed lane service transmission state |
| | In this state, the lane can perform high-speed service data transmission |
| Recovery | High-speed lane retraining state |
| | In this state, lane quick recovery is performed for the lane, including lane equalization, lane locking, and multi-lane alignment |
| LPx | High-speed lane low-power state |
| | In this state, the lane is in low-power states at different power gears |

Recovery may also be referred to as a recovery state. The HS may also be referred to as a high-speed state (or a high-speed transmission state, or a service transmission state).

The following describes the transmitter link state.

The TXLKSM and the LNSM(TX) are dependent on each other in a main-subordinate relationship. The TXLKSM implements link-level coordination operations of a plurality of TX lanes, and the LNSM(TX) implements independent operations of a single TX lane.

In the training, HS, recovery, and LPx states of the TXLKSM, a TXLKSM layer initiates link-level operations (such as link entering/exiting low power, link retraining, link recovery, and multi-lane deskew) based on an overall status of an entire link to control the LNSM(TX) to perform different operations.

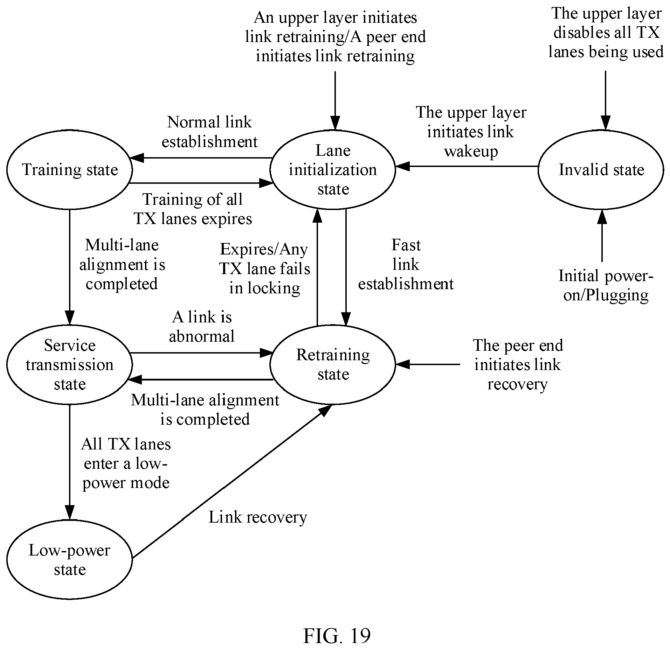

State switching of a transmitter link may be shown in FIG. 19. Description of each state of the transmitter link may be shown in Table 14.

**Table 14**

| TXLKSM status | Status overview |
|---|---|
| Disable | Disable all TX lanes by an upper layer, an initial power-on state, or a disconnection state |
| | In this state, initial training is not enabled for a TX link |
| INIT | Link initialization state |
| | This state corresponds to a port configuration state of a port state machine. In this state, an MDP and an MUP perform port configuration and response based on PORT-CFG and PORT-RSP. After the response is completed, all TX lanes at a local side perform electrical layer initialization based on a link configuration result |
| | Note: The link may also enter this state if the link is abnormal |
| Training | High-speed link training state |
| | In this state, initial lane training is performed for all TX lanes to be enabled at a local side (that is, a to-be-transmitted high-speed service that is determined through negotiation in a port configuration phase and that is not subsequently configured as TX lanes in a disable state), including lane clock recovery and locking, lane equalization, lane locking, and multi-lane deskew |
| HS | High-speed link service transmission state |
| | In this state, TX lanes that have succeeded in link training can perform high-speed service transmission together |
| Recovery | High-speed link recovery state |
| | In this state, lane recovery is performed for all TX lanes to be enabled at a local side |
| LPx | High-speed link low-power state |
| | No high-speed service transmission, where all TX lanes to be enabled at a local side are all in a low-power state |

The following describes the receiver link state.

The RXLKSM and the LNSM(RX) are dependent on each other in a main-subordinate relationship. The RXLKSM implements link-level coordination operations of a plurality of RX lanes, and the LNSM(RX) implements independent operations of a single RX lane.

In the training, HS, recovery, and LPx states of the RXLKSM, an RXLKSM layer initiates link-level operations (such as link entering/exiting low power, link retraining, link recovery, and multi-lane deskew) based on an overall status of an entire link to control the LNSM(RX) to perform different operations.

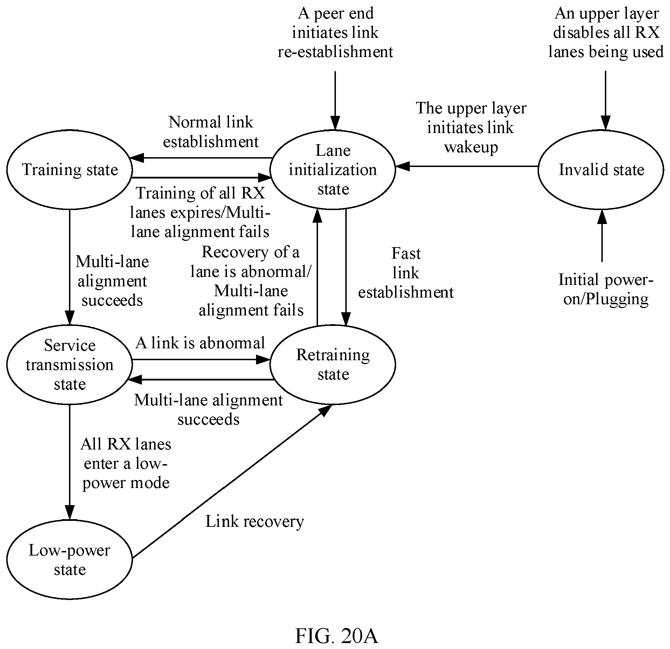

State switching of a receiver link may be shown in FIG. 20A. Description of each state of the transmitter link may be shown in Table 15.

**Table 15**

| RXLKSM status | Status overview |
|---|---|
| Disable | Disable all RX lanes by an upper layer, an initial power-on state, or a disconnection state |
| | In this state, initial training is not enabled for an RX link |
| INIT | Link initialization state |
| | This state corresponds to a port configuration state of a port state machine. In this state, an MDP and an MUP perform port configuration and response based on PORT-CFG and PORT-RSP. After the response is completed, all RX lanes at a local side perform electrical layer initialization based on a link configuration result |
| | Note: The link may also enter this state if the link is abnormal |
| Training | High-speed link training state |
| | In this state, initial lane training is performed for all RX lanes to be enabled at a local side (that is, a to-be-transmitted high-speed service that is determined through negotiation in a port configuration phase and that is not subsequently configured as RX lanes in a disable state), including lane clock recovery and locking, lane equalization, lane locking, and multi-lane deskew |
| HS | High-speed link service transmission state |
| | In this state, RX lanes that have succeeded in link training can perform high-speed service transmission together |
| Recovery | High-speed link recovery state |
| | In this state, lane recovery is performed for all RX lanes to be enabled at a local side |
| LPx | High-speed link low-power state |
| | No high-speed service transmission, where all RX lanes to be |
| RXLKSM status | Status overview |
| | enabled at a local side are all in a low-power state |

The following describes an overall status of a port link.

A logical layer needs to feed back the overall status of the link in real time for query by an upper layer.

If a port has only a TX lane unidirectional link, the overall status of the link is the same as the TXLKSM status.

If a port has only an RX lane unidirectional link, the overall status of the link is the same as the RXLKSM status.

If a port has a bidirectional link, reporting of the overall status of the link needs to be refreshed based on the TXLKSM status and the RXLKSM status. The update is based on mapping of link status reporting shown in Table 16.

**Table 16**

| Link scenario | Overall link status |
|---|---|
| TXLKSM is in TXLKSM.Disable, and RXLKSM is in RXLKSM. Disable | DISABLE |
| TXLKSM is in TXLKSM.INIT, or RXLKSM is in RXLKSM.INIT | INIT |
| Three conditions below are all met: | Training |
| 1. TXLKSM is in TXLKSM.Training, or RXLKSM is in RXLKSM.Training | |
| 2. TXLKSM is not in TXLKSM.INIT | |
| 3. RXLKSM is not in RXLKSM.INIT | |
| TXLKSM is in TXLKSM.HS | HS |
| RXLKSM is in RXLKSM.HS | |
| Three conditions below are all met: | Recovery |
| 1. TXLKSM is in TXLKSM.Recovery or RXLKSM is in RXLKSM.Recovery | |
| 2. TXLKSM is not in TXLKSM.INIT or TXLKSM.Training | |
| 3. RXLKSM is not in RXLKSM.INIT or RXLKSM.Training | |
| TXLKSM is in TXLKSM.LPX | LPX |
| RXLKSM is in RXLKSM.LPX | |

Then, a port link architecture is described.

The port link architecture supports a bidirectional link architecture and a unidirectional link architecture. The bidirectional link architecture includes a group of transmitter links and a group of receiver links. The unidirectional link architecture includes only a group of transmitter links or receiver links. Based on different port types and lane modes, a logical sublayer has different link architectures. A port-based type includes a downstream port (Main Downstream Port, MDP), an upstream port (Main Upstream Port, MUP), and a dual-role (Dual Roles of Data, DRD) port. A forward error correction (Forward Error Correction, FEC)-based encoding mode includes a TYPE-B port and a TYPE-C port. A port link architecture supported by a current protocol version is shown in Table 17.

**Table 17**

| Port type | | Link architecture | |
|---|---|---|---|
| | | Architecture 1 | Architecture 2 |
| TYPE-C | MDP | 4TX | 2TX+2TRX |
| | MUP | 4RX | 2RX+2TRX |
| | DRD | 4TRX | - |
| TYPE-B | MDP | 8TX | 4TX+4TRX |
| | MUP | 8RX | 4RX+4TRX |
| | DRD | 8TRX | - |

A total quantity of lanes of a TYPE-C MDP port is 4. A corresponding lane mode may support a 4T0R mode, a 3T1R mode, and a 2T2R mode. In the 4T0R mode, a link is a unidirectional link, four-lane TX_Link is supported, and RX_Link does not exist. In the 3T1R mode, a link is a bidirectional link, and three-lane TX_Link and one-lane RX_Link are supported. In the 2T2R mode, a link is a bidirectional link, and two-lane TX_Link and two-lane RX_Link are supported. A total quantity of lanes of a TYPE-B MDP port is 8. A link architecture is similar to a link architecture of the TYPE-C MDP port. The TYPE-B MDP port may support an 8T0R mode, a 7T1R mode, a 6T2R mode, a 5T3R mode, and a 4T4R mode. Different modes indicate different lane quantities of TX_Link and RX_Link in the architecture. For details, refer to the link definition of the TYPE-C port.

In the 4T0R mode, a link is a unidirectional link, that is, the foregoing pure unidirectional transmitter link.

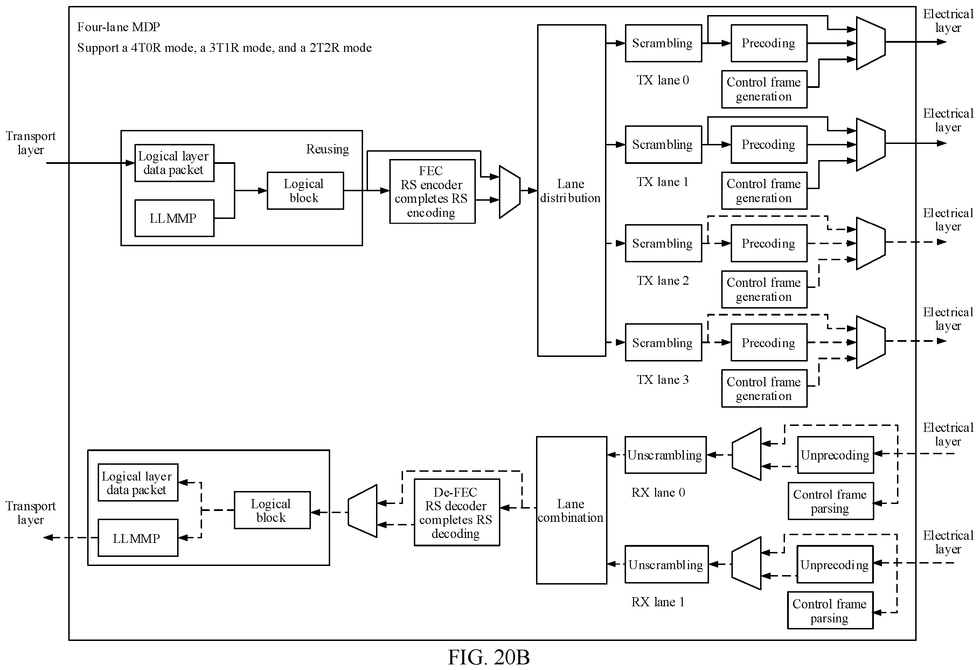

FIG. 20B shows a link architecture corresponding to a TYPE-C MDP port. The link architecture includes TX_Link and RX_Link. TX_Link includes four groups of transmitter lanes (a TX lane 0 to a TX lane 3), and RX_Link includes two groups of receiver lanes (an RX lane 0 and an RX lane 1). A unidirectional link architecture supports no receiver lane. Whether lanes corresponding to dashed lines in the figure are enabled is controlled by configuring a lane mode. Four groups of lanes are enabled in total. A 4T0R mode, a 3T1R mode, and a 2T2R mode may be supported.

A total quantity of lanes of a TYPE-C MUP port is 4. A corresponding lane mode may support a 0T4R mode, a 1T3R mode, and a 2T2R mode. In the 0T4R mode, a link is a unidirectional link, four-lane RX_Link is supported, and TX_Link does not exist. In the 1T3R mode, a link is a bidirectional link, and three-lane RX_Link and one-lane TX_Link are supported. In the 2T2R mode, a link is a bidirectional link, and two-lane RX_Link and two-lane TX_Link are supported. A total quantity of lanes of a TYPE-B MUP port is 8. A link architecture is similar to a link architecture of the TYPE-C MUP port. The TYPE-B MUP port may support a 0T8R mode, a 1T7R mode, a 2T6R mode, a 3T5R mode, and a 4T4R mode. Different modes indicate different lane quantities of TX_Link and RX_Link in the architecture. For details, refer to the link definition of the TYPE-C port.

Scrambling code shown in the figure is also referred to as Scramble, and unscrambling code is also referred to as Unscramble, to implement data scrambling and unscrambling functions of each lane independently. Precoding is also referred to as Precoding, and unprecoding is also referred to as Unprecoding, to implement data precoding and unprecoding functions of each lane independently. Control frame generation is also referred to as CF_Gen, and control frame parsing is also referred to as CF_Parse.

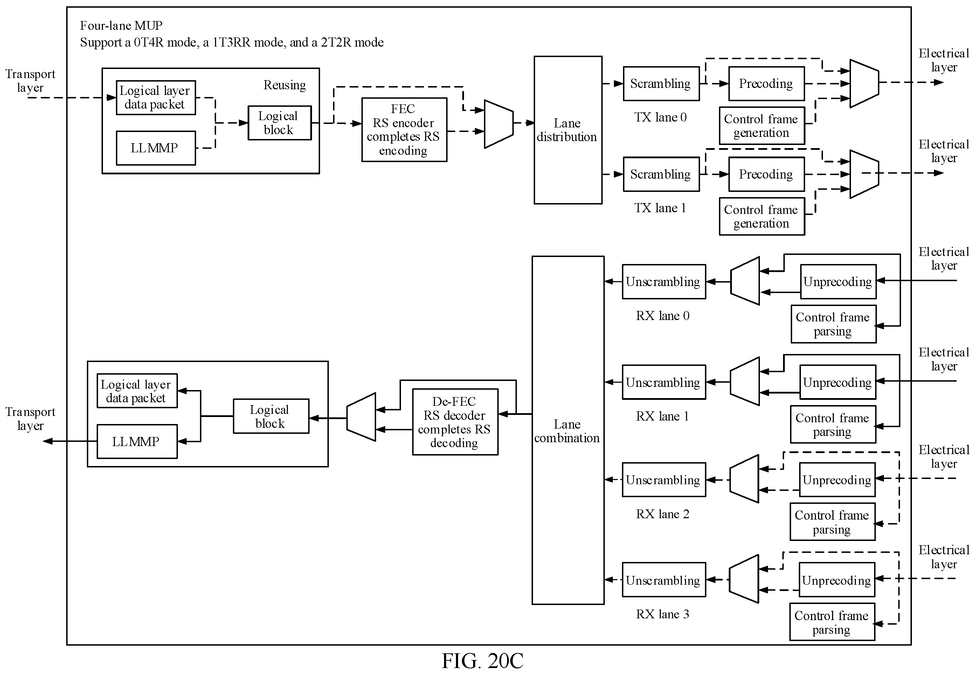

FIG. 20C shows a link architecture corresponding to a TYPE-C MUP port. The link architecture includes TX_Link and RX_Link. TX_Link includes two groups of transmitter lanes, and RX_Link includes four groups of receiver lanes. A unidirectional link architecture supports no transmitter lane. Whether lanes corresponding to dashed lines in the figure are enabled is controlled by configuring a lane mode. Four groups of lanes are enabled in total. A 0T4R mode, a 1T3R mode, and a 2T2R mode may be supported.

A total quantity of lanes of a TYPE-C DRD port is 4. A corresponding lane mode may support a 4T0R mode, a 3T1R mode, a 2T2R mode, a 1T3R mode, and a 0T4R mode. In the 4T0R mode and the 0T4R mode, a link is a unidirectional link. In the 3T1R mode, the 2T2R mode, and the 1T3R mode, a link is a bidirectional link. For details, refer to the MDP port architecture and the MUP port architecture. A total quantity of lanes of a TYPE-B DRD port is 8. A link architecture is similar to a link architecture of the TYPE-C DRD port. The TYPE-B DRD port may support an 8T0R mode, a 7T1R mode, a 6T2R mode, a 5T3R mode, a 4T4R mode, a 3T5R mode, a 2T6R mode, a 1T7R mode, and a 0T8R mode. Different modes indicate different lane quantities of TX_Link and RX_Link in the architecture. For details, refer to the definitions of the TYPE-C MDP port and the TYPE-C MUP port.

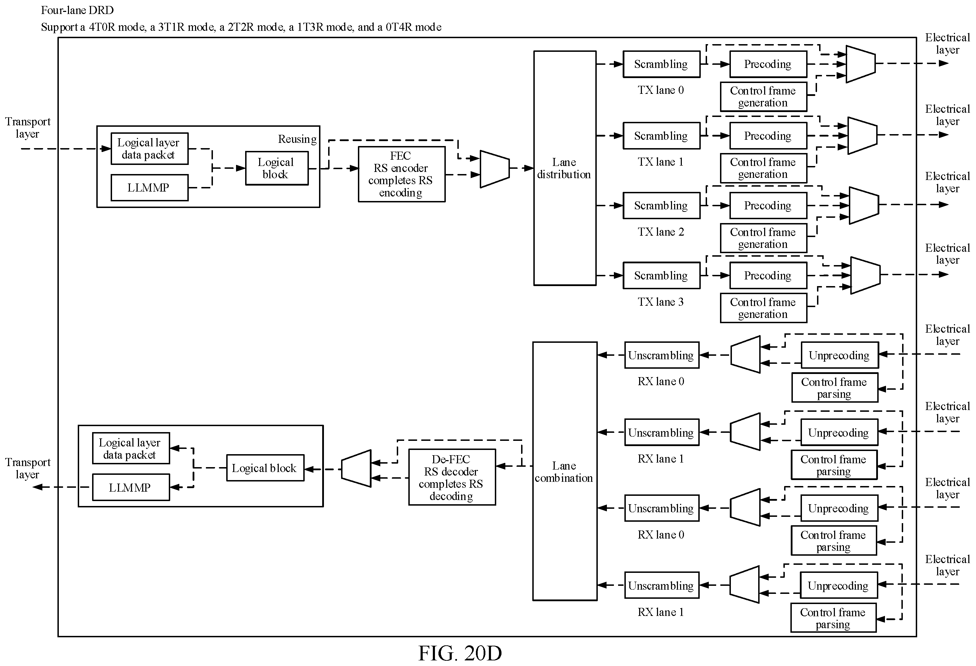

FIG. 20D shows a link architecture corresponding to a TYPE-C DRD port. The link architecture includes TX_Link and RX_Link. TX_Link includes four groups of transmitter lanes, and RX_Link includes four groups of receiver lanes. Whether lanes corresponding to dashed lines in the figure are enabled or disabled is controlled by configuring a lane mode. Four groups of lanes are enabled in total. A 4T0R mode, a 3T1R mode, a 2T2R mode, a 1T3R mode, and a 0T4R mode may be supported.

The following describes an example of a process in which a unidirectional link enters a low-power state.

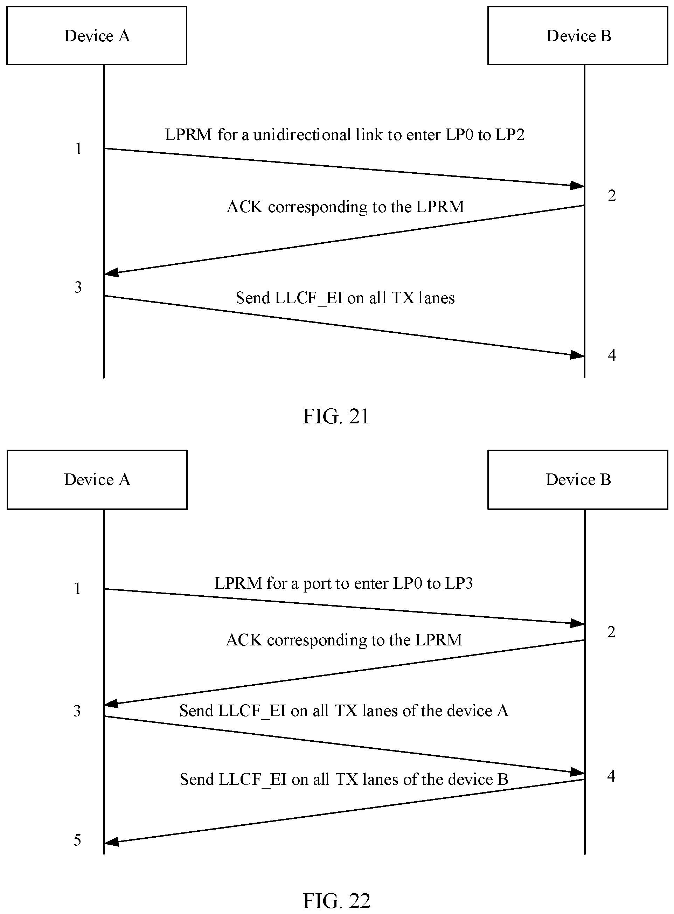

FIG. 21 shows a process in which a unidirectional link enters a low-power state. The process may include:
1. A device A sends a low-power request message LPRM to a device B, to indicate a unidirectional link to enter LP0 to LP2.

When a main link works, the device A preferentially sends the LPRM through a transmitter link in the main link ML. LP_GEAR in the LPRM indicates a low-power request gear (any one of LP0-LP2). LP_MODE=1b indicates entering a low-power mode. LP_WAY=0b indicates that the unidirectional link enters low power.

2. The device B feeds back, to the device A, ACK corresponding to the LPRM.

If a response, fed back by the device B to the device A, to an LPRM is NACK, the process ends, and neither the device A nor the device B enters low power. Other subsequent NACK processes of low power are similar. Details are not described again.

Further, if the main link is a pure unidirectional link, that is, the main link of the device A includes only a transmitter link, and the main link of the device B includes only a receiver link, the device B feeds back ACK for the LPRM through a sideband link.

3. After transmission of service data is completed on all TX lanes of the device A, LLCF_EI is sent, and then all the TX lanes of the device A enter a low-power state.

The device A sends LLCF_EI to each TX lane. If the device A includes only a transmitter link, and all the TX lanes of the device A enter low power, it indicates that the transmitter link of the device A enters the low-power state and an overall status of the link is the low-power state.

All the TX lanes of the device A are all lanes in the transmitter link in the main link of the device A. That all the TX lanes of the device A enter the low-power state means that all the TX lanes of the device A enter the low-power state indicated by LP_GEAR. Details are not described one by one below.

4. The device B receives the LPRM sent by the device A. After all RX lanes receive LLCF_EI, all the RX lanes of the device B enter the low-power state (the low-power state indicated by the low-power request gear).

All the RX lanes of the device B are all lanes in a receiver link of the main link of the device B. That all the RX lanes of the device B enter the low-power state means that all the RX lanes of the device B enter the low-power state indicated by LP_GEAR.

Further, if the device B includes only a receiver link, all the RX lanes of the device B enter low power, that is, the receiver link of the device B enters the low-power state and an overall status of the link is the low-power state.

Further, when the device A or the device B enters low power, a port of the device A or the device B may reserve related training information to support subsequent quick recovery to exit low power. The reserved training information may include: a Swing parameter, an FFE parameter, a lane rate, and the like selected by a transmitter side of each high-speed differential lane.

The following describes an example of a process in which a port enters a low-power state.

FIG. 22 shows a process in which a port enters a low-power state. The process may include:
1. A device A sends a low-power request LPRM to a device B, to indicate a port to enter LP0 to LP3.

When a main link works, the device A preferentially sends the LPRM through a transmitter link in the main link ML. LP_GEAR in the LPRM indicates a low-power request gear (any one of LP0-LP3). LP_MODE=1b indicates entering a low-power mode. LP_WAY=1b indicates that a bidirectional link enters low power.

2. The device B feeds back, to the device A, ACK corresponding to the LPRM.

When the main link works, the device B preferentially sends, through a transmitter link in the main link ML, the ACK corresponding to the LPRM.

Further, if the main link is a pure unidirectional link, that is, the main link of the device A includes only a transmitter link, and the main link of the device B includes only a receiver link, the device B feeds back ACK for the LPRM through a sideband link.

3. After the device A receives ACK corresponding to the LPRM, four LLCF_EIs are sent after transmission of service data is completed on all TX lanes. Then, all the TX lanes of the device A enter a low-power state (a low-power state indicated by a low-power request gear).

The device A sends four LLCF_EIs to each TX lane.

That all the TX lanes of the device A enter the low-power state means that all the TX lanes of the device A enter the low-power state indicated by LP_GEAR.

All the TX lanes of the device A enter the low-power state, that is, the transmitter link of the device A enters the low-power state.

4. After all RX lanes of the device B receive LLCF_EI, four LLCF_EIs are sent after service data is sent to all TX lanes. Then, all the TX lanes and the RX lanes of the device B enter the low-power state.

All the TX lanes and the RX lanes of the device B enter the low-power state. It indicates that the transmitter link and the receiver link of the device B enter the low-power state, and an overall status of the link is the low-power state.

That all the TX lanes and the RX lanes of the device B enter the low-power state means that all the TX lanes and the RX lanes of the device B enter the low-power state indicated by LP_GEAR.

5. After all the RX lanes of the device A receive LLCF_EI, all the RX lanes of the device A enter the low-power state.

When all the RX lanes of the device A enter the low-power state, it indicates that the receiver link of the device A enters the low-power state, and the transmitter link of the device A has entered the low-power state. Therefore, an overall state of the link of the device A is the low-power state.

Further, for a pure unidirectional link, a low-power request may be initiated for a port to enter LP3, to save more power. In this case, a port of the device A includes only a transmitter link, and a port of the device B includes only a receiver link. In this scenario, in step 2, the device B feeds back, to the device A through the sideband link, ACK corresponding to the LPRM. In step 4, after all the RX lanes of the device B receive LLCF_EI, all the RX lanes of the device B enter the low-power state. Because the device A has no receiver link, and the device B has no transmitter link, it is unnecessary to perform "All the TX lanes of the device B enter low power, and the device B sends four LLCF_EIs after sending service data to all the TX lanes", and step 5 is also not needed.

The following describes an example of a process in which a unidirectional link exits a low-power state by using a wakeup frame.

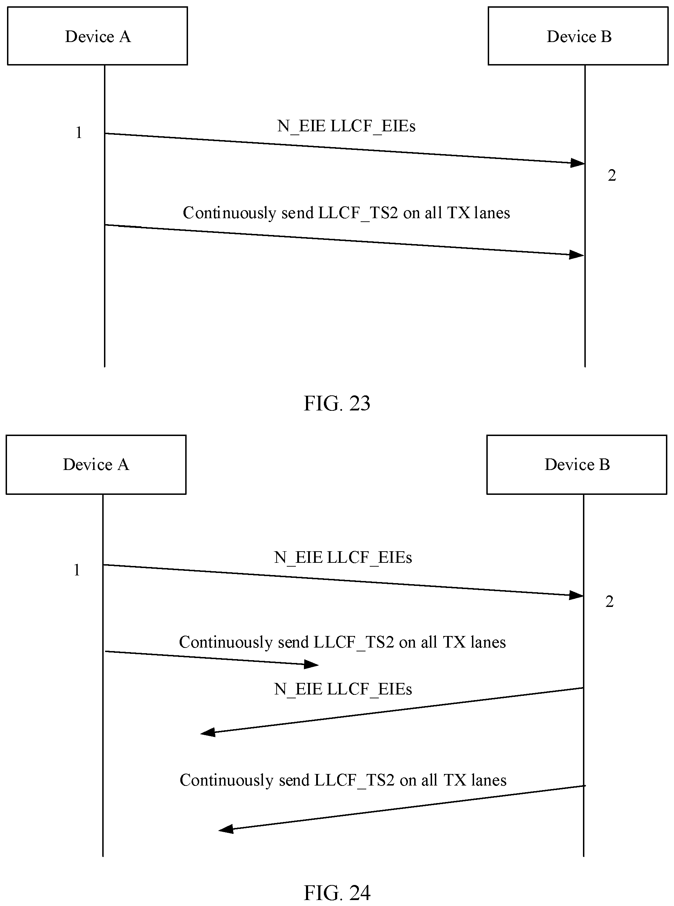

FIG. 23 shows a process in which a unidirectional link exits a low-power state of LP0 to LP2. The process may include:
1. A transmitter link of a device A exits low power (a corresponding TXLKSM enters a recovery state), sends N_EIE LLCF_EIEs to a device B, and continuously sends LLCF_TS2 to perform link recovery.

All TX lanes in the transmitter link of the device A send LLCF_ELE and LLCF_TS2 to RX lanes of the device B.

An LLCF_ELE format is related to each lane rate. A port should select, based on a recorded lane rate supported by a transmitter link and/or a receiver link, an LLCF_ELE format corresponding to the lane rate.

LLCF_TS2 is directly sent, to enter a lane locking phase of link training, thereby reducing a time for exiting low power.

2. The device B senses that a receiver side is in a non-electrical idle state, and a receiver link of the device B exits low power (a corresponding RXLKSM enters a recovery state).

Sensing that the receiver side is in the non-electrical idle state means that LLCF_EI is received.

The following describes an example of a process in which a port exits a low-power state by using a wakeup frame.

FIG. 24 shows a process in which a port exits a low-power state of LP0 to LP2. The process may include:
1. A transmitter link of a device A exits low power (a corresponding TXLKSM enters a recovery state), sends N_EIE LLCF_EIEs to a device B, and continuously sends LLCF_TS2 to perform link recovery.
2. The device B senses that a transmitter side is in a non-electrical idle state. A receiver link of the device B exits low power (a corresponding RXLKSM enters a recovery state), sends N_EIE LLCF_EIEs to the device A, and continuously sends LLCF_TS2 to perform link recovery.

Before the N_EIE LLCF_EIEs are sent to the device B, the transmitter link of the device B exits low power (a corresponding TXLKSM enters a recovery state).

The device A senses that a receiver side is in a non-electrical idle state, and a receiver link of the device A exits low power (a corresponding RXLKSM enters a recovery state).

The following describes an example of a process in which a port exits a low-power state by using a low-power request message.

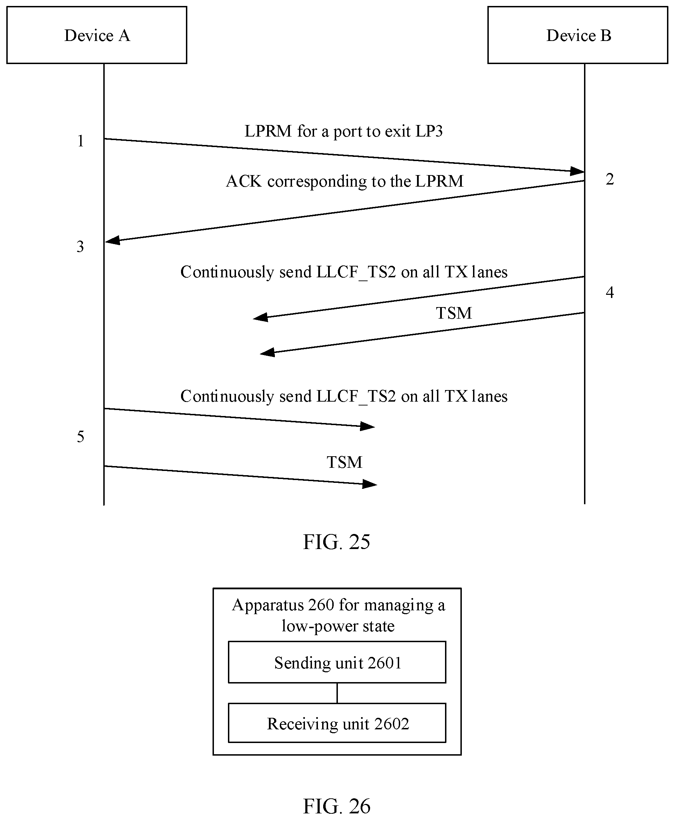

FIG. 25 shows a process in which a port exits a low-power state of LP3. The process may include:
1. A device A sends a low-power request LPRM to a device B, to indicate a port to exit LP3.

In LP3, because a main link cannot sense LLCF_EIE, the device A sends the LPRM to the device B through a sideband link.

In the LPRM, LP_MODE=0b indicates to exit low power, LP_WAY=1b indicates that a bidirectional link exits low power.

2. After receiving the LRRM, the device B feeds back, to the device A, ACK corresponding to the LPRM, and a transmitter link and a receiver link of the device B exit low power.

That the transmitter link and the receiver link of the device B exit low power means that all TX lanes and all RX lanes of the device B exit low power.

The transmitter link and the receiver link of the device B enter a recovery state. Because the link has not been recovered, the device B sends, through the sideband link, the ACK corresponding to the LPRM.

3. After the device A receives the ACK, a transmitter link and a receiver link of the device A exit low power.

That the transmitter link and the receiver link of the device A exit low power means that all TX lanes and all RX lanes of the device A exit low power.

The transmitter link and the receiver link of the device A enter a recovery state.

4. After the device B exits low power, the device B continuously sends LLCF_TS2 to perform link recovery, and then needs to send a TSM to indicate that recovery training can be started for a corresponding lane.

Each TX lane in the transmitter link of the device B continuously sends LLCF_TS2 to the RX lane of the device A to perform link recovery.

Because the transmitter link of the device B has not entered an HS state at this time, the device B sends the TSM through the sideband link.

5. After exiting low power, the device A continuously sends LLCF_TS2 to perform link recovery. Then, a TSM needs to be sent to indicate that recovery training can be started for a corresponding lane.

Each TX lane in the transmitter link of the device A continuously sends LLCF_TS2 to the RX lane of the device B to perform link recovery.

Because the transmitter link of the device A has not entered an HS state, the device A sends the TSM through the sideband link.

Further, the process in which the port exits LP3 shown in the foregoing figure may be initiated by the device B. The process is similar to the foregoing process, and is not described herein again.

Further, for a pure unidirectional link, the device A or the device B may initiate a low-power request for the port to exit LP3.

For example, for the pure unidirectional link, the device A initiates the low-power request for the port to exit LP3. A port of the device A includes only a transmitter link, and a port of the device B includes only a receiver link. In step 2, "The transmitter link of the device B exits low power" does not need to be performed. In step 3, "The receiver link of the device A exits low power" does not need to be performed. Step 4 does not need to be performed.

The foregoing mainly describes the solutions provided in embodiments of the present invention from a perspective of a working principle of a device. It may be understood that, to implement the foregoing functions, the compute device or the like includes corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In embodiments of the present invention, the compute device or the like may be divided into functional modules based on the foregoing method example. For example, the functional modules corresponding to the corresponding functions may be obtained through division, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

When each functional module is obtained through division based on each corresponding function, FIG. 26 shows an apparatus 260 for managing a low-power state according to an embodiment of this application. The apparatus 260 for managing a low-power state is configured to implement functions of a first device or a device A in the foregoing method embodiment. As shown in FIG. 26, the apparatus 260 for managing a low-power state may include a sending unit 2601 and a receiving unit 2602. The sending unit 2601 is configured to perform the process S601 in FIG. 6 or FIG. 7, or perform the process S801 in FIG. 8 or FIG. 9, or perform the process S807 in FIG. 9, or perform the process S1003 in FIG. 10 or FIG. 11, or perform the process S1009 in FIG. 11, or perform the process S1202 in FIG. 12 or FIG. 13, or perform the process S1205 in FIG. 13. The receiving unit 2602 is configured to perform the process S603 in FIG. 6 or FIG. 7, or perform the process S803 in FIG. 8 or FIG. 9, or perform the process S812 in FIG. 9, or perform the process S1002 in FIG. 10 or FIG. 11, or perform the process S1008 in FIG. 11, or perform the process S1208 in FIG. 13. All related content of the steps in the foregoing method embodiments may be cited in function descriptions of the corresponding functional modules. Details are not described herein again.

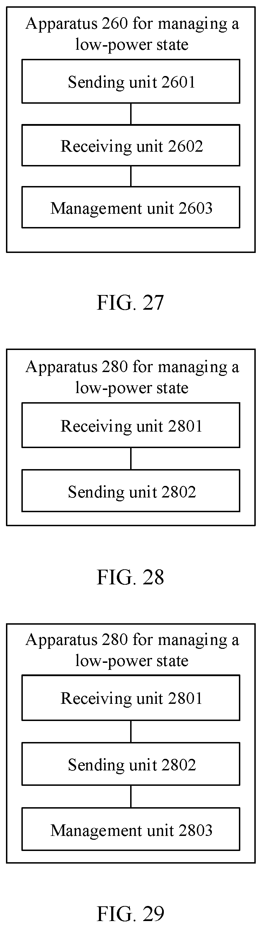

Further, as shown in FIG. 27, the apparatus 260 for managing a low-power state provided in this embodiment of this application may further include a management unit 2603, configured to control a link of a device to enter or exit a low-power state.

When each functional module is obtained through division based on each corresponding function, FIG. 28 shows another apparatus 280 for managing a low-power state according to an embodiment of this application. The apparatus 280 for managing a low-power state is configured to implement functions of a second device or a device B in the foregoing method embodiment. As shown in FIG. 28, the apparatus 280 for managing a low-power state may include a receiving unit 2801 and a sending unit 2802. The receiving unit 2801 is configured to perform the process S602 in FIG. 6 or FIG. 7, or perform the process S802 in FIG. 8 or FIG. 9, or perform the process S808 in FIG. 9, or perform the process S1004 in FIG. 10 or FIG. 11, or perform the process S1010 in FIG. 11, or perform the process S1203 in FIG. 12 or FIG. 13. The sending unit 2802 is configured to perform the process S602 in FIG. 6 or FIG. 7, or perform the process S802 in FIG. 8 or FIG. 9, or perform the process S811 in FIG. 9, or perform the process S1001 in FIG. 10 or FIG. 11, or perform the process S1007 in FIG. 11, or perform the process S1207 or S1210 in FIG. 13. All related content of the steps in the foregoing method embodiments may be cited in function descriptions of the corresponding functional modules. Details are not described herein again.

Further, as shown in FIG. 29, the apparatus 280 for managing a low-power state provided in this embodiment of this application may further include a management unit 2803, configured to control a link of a device to enter or exit a low-power state.

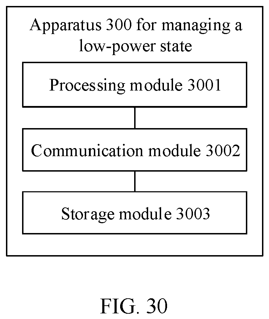

When an integrated unit is used, FIG. 30 shows still another apparatus 300 for managing a low-power state according to an embodiment of this application. The apparatus 300 is configured to implement functions of the first device or the second device in the foregoing embodiment. The apparatus 300 for managing a low-power state includes a processing module 3001 and a communication module 3002. The processing module 3001 is configured to control and manage an action of the apparatus 300 for managing a low-power state. The communication module 3002 is configured to communicate with another device. For example, the processing module 3001 is configured to control the communication module 3002 and the apparatus 300 for managing a low-power state to interact with another device. The apparatus 300 for managing a low-power state may further include a storage module 3003, configured to store and manage program code and data of the apparatus 300 for managing a low-power state.

The processing module 3001 may be the processor 5010 in the physical structure of the compute device 50 shown in FIG. 5, or may be a processor or a controller. For example, the processing module 3001 may be a CPU, a general-purpose processor, a DSP, an ASIC, an FPGA or another programmable logic device, a transistor logic device, a hardware component, or any combination thereof. The processing module may implement or execute various example logical blocks, modules, and circuits described with reference to content disclosed in this application. Alternatively, the processing module 3001 may be a combination for implementing computing functions, such as a combination of one or more microprocessors, a combination of a DSP and a microprocessor, or the like. The communication module 3002 may be the communication interface 5040 in the physical structure of the compute device 50 shown in FIG. 5. The communication module 3002 may be a communication port, or may be a transceiver, a transceiver circuit, a communication interface, or the like. Alternatively, the communication interface may communicate with another device through the foregoing element that has receiving and sending functions. The foregoing element that has receiving and sending functions may be implemented through an antenna and/or a radio frequency apparatus. The storage module 3003 may be the memory 5030 in the physical structure of the compute device 50 shown in FIG. 5.

As described above, the apparatus 260 for managing a low-power state, the apparatus 280 for managing a low-power state, and the apparatus 300 for managing a low-power state provided in embodiments of this application may be configured to implement functions of the first device or the second device in the foregoing embodiments of this application. For ease of description, only parts related to embodiments of this application are shown. For specific technical details that are not disclosed, refer to embodiments of this application.

In still another aspect, an embodiment of this application provides a data transmission system, including the apparatus 260 for managing a low-power state and the apparatus 280 for managing a low-power state.

In another form of this embodiment, a computer-readable storage medium is provided. The computer-readable storage medium stores instructions. When the instructions are executed, the method for managing a low-power state in the foregoing method embodiment is performed.

In another form of this embodiment, a computer program product including instructions is provided. When the computer program product runs on a computer, the computer is enabled to perform the method for managing a low-power state in the foregoing method embodiment.

In another form of this embodiment, a chip is provided, including one or more interface circuits and one or more processors. The interface circuit is configured to: receive a signal from a memory of an electronic device, and send the received signal to the processor. The signal includes computer instructions stored in the memory. When the processor executes the computer instructions, the electronic device is enabled to perform operation steps in the method according to the first aspect or any possible implementation.

An embodiment of this application further provides a chip system. The chip system includes a processor, configured to implement the technical method in the embodiments of the present invention. In a possible design, the chip system further includes a memory, configured to store a necessary program instruction and/or data in this embodiment of the present invention. In a possible design, the chip system further includes a memory, configured to be used by the processor to invoke application program code stored in the memory. The chip system may include one or more chips, or may include a chip and another discrete component. This is not specifically limited in this embodiment of this application.

A person skilled in the art should be easily aware that, with reference to the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

All or a part of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedures or functions according to embodiments of the present invention or this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be an SSD.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for managing a low-power state, applied to a first device or a chip in a first device, wherein the method comprises:
sending a first low-power request message to a second device, wherein the first low-power request message comprises a first low-power request mode, a first low-power request direction, and a low-power request gear, the first low-power request mode is entering low power, and the first low-power request direction comprises unidirectional or bidirectional; and
receiving, from the second device, acknowledgment/negative acknowledgment information corresponding to the first low-power request message.

2. The method according to claim 1, wherein a link between the first device and the second device comprises a main link and a sideband link, the main link is a unidirectional transmitter link from the first device to the second device, the sideband link is a bidirectional link, and receiving the acknowledgment/negative acknowledgment information from the second device comprises:
receiving the acknowledgment/negative acknowledgment information from the second device through the sideband link.

3. The method according to claim 1 or 2, wherein the method further comprises:
entering, by a transmitter link in a main link of the first device, a low-power state indicated by the low-power request gear.

4. The method according to claim 3, wherein the first low-power request direction is bidirectional, and the method further comprises:
entering, by a receiver link in the main link of the first device, the low-power state indicated by the low-power request gear.

5. The method according to any one of claims 1 to 4, wherein the low-power request gear comprises one or more of the following:
a low-power gear at which a receiver side does not support a control frame-based wakeup capability; or
a low-power gear at which a receiver side supports a control frame-based wakeup capability.

6. The method according to any one of claims 1 to 5, wherein the first low-power request message is packaged as a logical layer main link management packet or a logical layer sideband link management packet for transmission.

7. The method according to any one of claims 1 to 6, wherein the low-power request gear is the low-power gear at which the receiver side does not support the control frame-based wakeup capability, the link between the first device and the second device comprises the main link and the sideband link, and the method further comprises:
sending a second low-power request message to the second device through the sideband link, wherein the second low-power request message comprises a second low-power request mode and a second low-power request direction, the second low-power request mode is exiting low power, and the second low-power request direction comprises unidirectional or bidirectional; and
receiving, from the second device through the sideband link, acknowledgment/negative acknowledgment information corresponding to the second low-power request message.

8. The method according to claim 7, wherein the method further comprises:
exiting, by the transmitter link in the main link of the first device, the low-power state; and
after exiting the low-power state, continuously sending a first control frame to perform link recovery.

9. The method according to claim 8, wherein the method further comprises:
exiting, by the receiver link in the main link of the first device, the low-power state.

10. The method according to any one of claims 7 to 9, wherein the first low-power request direction is unidirectional, and the second low-power request direction is unidirectional.

11. The method according to any one of claims 7 to 9, wherein the first low-power request direction is bidirectional, and the second low-power request direction is unidirectional.

12. The method according to any one of claims 7 to 9, wherein the first low-power request direction is bidirectional, and the second low-power request direction is bidirectional.

13. The method according to any one of claims 1 to 6, wherein the first low-power request direction is bidirectional, the low-power request gear is the low-power gear at which the receiver side does not support the control frame-based wakeup capability, the link between the first device and the second device comprises the main link and the sideband link, and the method further comprises:
receiving a third low-power request message from the second device through the sideband link, wherein the third low-power request message comprises a third low-power request mode and a third low-power request direction, the third low-power request mode is exiting low power, and the third low-power request direction is bidirectional; and
sending, to the second device through the sideband link, acknowledgment/negative acknowledgment information corresponding to the third low-power request message.

14. The method according to claim 13, wherein the method further comprises:
exiting, by the transmitter link and the receiver link in the main link of the first device, the low-power state; and
after exiting the low-power state, continuously sending a first control frame to perform link recovery.

15. The method according to any one of claims 1 to 6, wherein the method further comprises:
exiting, by the transmitter link in the main link of the first device, the low-power state;
sending one or more second control frames to the second device, wherein the second control frame is used by a transmitter side to wake up a high-speed link line, and different lane rates correspond to different second-control-frame payloads; and
continuously sending a first control frame to perform link recovery.

16. The method according to any one of claims 1 to 6 or claim 15, wherein the method further comprises:
receiving one or more second control frames from the second device, wherein the second control frame is used by the transmitter side to wake up the high-speed link line, and different lane rates correspond to different second-control-frame payloads; and
exiting, by the receiver link in the main link of the first device, the low-power state.

17. The method according to claim 15 or 16, wherein
when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times;
when a lane rate is HS2 (6 Gbps/8 Gbps), a payload length of a second control frame is 32 bytes, and a payload is fixedly 0x0000_0000_FFFF_FFFF repeated four times;
when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and
when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

18. The method according to claim 8, 14, or 15, wherein the first control frame is a logical layer training sequence 2 LLCF_TS2, and LLCF_TS2 is used to confirm a synchronization status between the transmitter side and the receiver side.

19. The method according to claim 8, 14, 15, or 18, wherein continuously sending the first control frame to perform link recovery comprises:
continuously sending the first control frame to perform lane locking; and
after lane locking succeeds, performing multi-lane alignment.

20. The method according to claim 8, 14, 15, 18, or 19, wherein a specified quantity of first control frames indicate that lane locking succeeds.

21. A method for managing a low-power state, applied to a second device or a chip in a second device, wherein the method comprises:
receiving a first low-power request message from the first device, wherein the first low-power request message comprises a first low-power request mode, a first low-power request direction, and a low-power request gear, the first low-power request mode is entering low power, and the first low-power request direction comprises unidirectional or bidirectional; and
sending, to the first device, acknowledgment/negative acknowledgment information corresponding to the first low-power request message.

22. The method according to claim 21, wherein a link between the first device and the second device comprises a main link and a sideband link, the main link is a unidirectional transmitter link from the first device to the second device, the sideband link is a bidirectional link, and sending, to the first device, the acknowledgment/negative acknowledgment information corresponding to the first low-power request message comprises:
sending the acknowledgment/negative acknowledgment information through the sideband link.

23. The method according to claim 21 or 22, wherein the method further comprises:
entering, by a receiver link in a main link of the second device, a low-power state indicated by the low-power request gear.

24. The method according to claim 23, wherein the first low-power request direction is bidirectional, and the method further comprises:
entering, by a transmitter link in the main link of the second device, the low-power state indicated by the low-power request gear.

25. The method according to any one of claims 21 to 24, wherein the low-power request gear comprises one or more of the following:
a low-power gear at which a receiver side does not support a control frame-based wakeup capability;
or,
a low-power gear at which a receiver side supports a control frame-based wakeup capability.

26. The method according to any one of claims 21 to 25, wherein the first low-power request message is packaged as a logical layer main link management packet or a logical layer sideband link management packet for transmission.

27. The method according to any one of claims 21 to 26, wherein the low-power request gear is the low-power state at which the receiver side does not support the control frame-based wakeup capability, the link between the first device and the second device comprises the main link and the sideband link, and the method further comprises:
receiving a second low-power request message from the first device through the sideband link, wherein the second low-power request message comprises a second low-power request mode and a second low-power request direction, the second low-power request mode is exiting low power, and the second low-power request direction comprises unidirectional or bidirectional; and
sending, to the first device through the sideband link, acknowledgment/negative acknowledgment information corresponding to the second low-power request message.

28. The method according to claim 27, wherein the method further comprises:
exiting, by the receiver link in the main link of the second device, the low-power state.

29. The method according to claim 28, wherein the method further comprises:
exiting, by the transmitter link in the main link of the second device, the low-power state; and
after exiting the low-power state, continuously sending a first control frame to perform link recovery.

30. The method according to any one of claims 27 to 29, wherein the first low-power request direction is unidirectional, and the second low-power request direction is unidirectional.

31. The method according to any one of claims 27 to 29, wherein the first low-power request direction is bidirectional, and the second low-power request direction is unidirectional.

32. The method according to any one of claims 27 to 29, wherein the first low-power request direction is bidirectional, and the second low-power request direction is bidirectional.

33. The method according to any one of claims 21 to 26, wherein the first low-power request direction is bidirectional, the low-power request gear is the low-power state at which the receiver side does not support the control frame-based wakeup capability, the link between the first device and the second device comprises the main link and the sideband link, and the method further comprises:
sending a third low-power request message to the first device through the sideband link, wherein the third low-power request message comprises a third low-power request mode and a third low-power request direction, the third low-power request mode is exiting low power, and the third low-power request direction is bidirectional; and
receiving, from the first device through the sideband link, acknowledgment/negative acknowledgment information corresponding to the third low-power request message.

34. The method according to claim 33, wherein the method further comprises:
exiting, by the transmitter link and the receiver link in the main link of the second device, the low-power state; and
after exiting the low-power state, continuously sending a first control frame to perform link recovery.

35. The method according to any one of claims 21 to 26, wherein the method further comprises:
receiving one or more second control frames from the first device, wherein the second control frame is used by a transmitter side to wake up a high-speed link line, and different lane rates correspond to different second-control-frame payloads; and
exiting, by the receiver link in the main link of the second device, the low-power state.

36. The method according to any one of claims 21 to 26 or claim 35, wherein the method further comprises:
exiting, by the transmitter link in the main link of the second device, the low-power state;
sending one or more second control frames to the first device; and
continuously sending a first control frame to perform link recovery.

37. The method according to claim 35 or 36, wherein
when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times;
when a lane rate is HS2 (6 Gbps/8 Gbps), a payload length of a second control frame is 32 bytes, and a payload is fixedly 0x0000_0000_FFFF_FFFF repeated four times;
when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and
when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

38. The method according to claim 29, 34, or 36, wherein the first control frame is a logical layer training sequence 2 LLCF_TS2, and LLCF_TS2 is used to confirm a synchronization status between the transmitter side and the receiver side.

39. The method according to claim 29, 34, 36, or 38, wherein continuously sending the first control frame to perform link recovery comprises:
continuously sending the first control frame to perform lane locking; and
after lane locking succeeds, performing multi-lane alignment.

40. The method according to claim 29, 34, 36, 38, or 39, wherein a specified quantity of first control frames indicate that lane locking succeeds.

41. An apparatus for managing a low-power state, applied to a first device or a chip in a first device, wherein the apparatus comprises:
a sending unit, configured to send a first low-power request message to a second device, wherein the first low-power request message comprises a first low-power request mode, a first low-power request direction, and a low-power request gear, the first low-power request mode is entering low power, and the first low-power request direction comprises unidirectional or bidirectional; and
a receiving unit, configured to receive, from the second device, acknowledgment/negative acknowledgment information corresponding to the first low-power request message.

42. The apparatus according to claim 41, wherein a link between the first device and the second device comprises a main link and a sideband link, the main link is a unidirectional transmitter link from the first device to the second device, the sideband link is a bidirectional link, and the receiving unit is specifically configured to:
receive the acknowledgment/negative acknowledgment information from the second device through the sideband link.

43. The apparatus according to claim 41 or 42, wherein the apparatus further comprises a management unit, configured to:
control a transmitter link in a main link of the first device to enter a low-power state indicated by the low-power request gear.

44. The apparatus according to claim 43, wherein the first low-power request direction is bidirectional, and the management unit is further configured to:
control a receiver link in the main link of the first device to enter the low-power state indicated by the low-power request gear.

45. The apparatus according to any one of claims 41 to 44, wherein the low-power request gear comprises one or more of the following:
a low-power gear at which a receiver side does not support a control frame-based wakeup capability;
or,
a low-power gear at which a receiver side supports a control frame-based wakeup capability.

46. The apparatus according to any one of claims 41 to 45, wherein the first low-power request message is packaged as a logical layer main link management packet or a logical layer sideband link management packet for transmission.

47. The apparatus according to any one of claims 41 to 46, wherein the low-power request gear is the low-power gear at which the receiver side does not support the control frame-based wakeup capability, and the link between the first device and the second device comprises the main link and the sideband link;
the sending unit is further configured to send a second low-power request message to the second device through the sideband link, wherein the second low-power request message comprises a second low-power request mode and a second low-power request direction, the second low-power request mode is exiting low power, and the second low-power request direction comprises unidirectional or bidirectional; and
the receiving unit is further configured to receive, from the second device through the sideband link, acknowledgment/negative acknowledgment information corresponding to the second low-power request message.

48. The apparatus according to claim 47, wherein
the apparatus further comprises the management unit, configured to control the transmitter link in the main link of the first device to exit the low-power state; and
the sending unit is further configured to: after exiting the low-power state, continuously send a first control frame to perform link recovery.

49. The apparatus according to claim 48, wherein the management unit is further configured to:
control the receiver link in the main link of the first device to exit the low-power state.

50. The apparatus according to any one of claims 47 to 49, wherein the first low-power request direction is unidirectional, and the second low-power request direction is unidirectional.

51. The apparatus according to any one of claims 47 to 49, wherein the first low-power request direction is bidirectional, and the second low-power request direction is unidirectional.

52. The apparatus according to any one of claims 47 to 49, wherein the first low-power request direction is bidirectional, and the second low-power request direction is bidirectional.

53. The apparatus according to any one of claims 41 to 46, wherein the first low-power request direction is bidirectional, the low-power request gear is the low-power gear at which the receiver side does not support the control frame-based wakeup capability, and the link between the first device and the second device comprises the main link and the sideband link;
the receiving unit is further configured to receive a third low-power request message from the second device through the sideband link, wherein the third low-power request message comprises a third low-power request mode and a third low-power request direction, the third low-power request mode is exiting low power, and the third low-power request direction is bidirectional; and
the sending unit is further configured to send, to the second device through the sideband link, acknowledgment/negative acknowledgment information corresponding to the third low-power request message.

54. The apparatus according to claim 53, wherein
the apparatus further comprises the management unit, configured to control the transmitter link and the receiver link in the main link of the first device to exit the low-power state; and
the sending unit is further configured to: after exiting the low-power state, continuously send a first control frame to perform link recovery.

55. The apparatus according to any one of claims 41 to 46, wherein
the apparatus further comprises the management unit, configured to exit, by the transmitter link in the main link of the first device, the low-power state;
the sending unit is further configured to send one or more second control frames to the second device, wherein the second control frame is used by a transmitter side to wake up a high-speed link line, and different lane rates correspond to different second-control-frame payloads; and
the sending unit is further configured to continuously send a first control frame to perform link recovery.

56. The apparatus according to any one of claims 41 to 46 or claim 55, wherein
the receiving unit is further configured to receive one or more second control frames from the second device, wherein the second control frame is used by the transmitter side to wake up the high-speed link line, and different lane rates correspond to different second-control-frame payloads; and
the apparatus further comprises the management unit, configured to control the receiver link in the main link of the first device to exit the low-power state; and

57. The apparatus according to claim 55 or 56, wherein
when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times;
when a lane rate is HS2 (6 Gbps/8 Gbps), a payload length of a second control frame is 32 bytes, and a payload is fixedly 0x0000_0000_FFFF_FFFF repeated four times;
when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and
when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

58. The apparatus according to claim 48, 54, or 55, wherein the first control frame is a logical layer training sequence 2 LLCF_TS2, and LLCF_TS2 is used to confirm a synchronization status between the transmitter side and the receiver side.

59. The apparatus according to claim 48, 54, 55, or 58, wherein the sending unit is specifically configured to:
continuously send the first control frame to perform lane locking; and
after lane locking succeeds, perform multi-lane alignment.

60. The apparatus according to claim 48, 54, 55, 58, or 59, wherein a specified quantity of first control frames indicate that lane locking succeeds.

61. An apparatus for managing a low-power state, applied to a second device or a chip in a second device, wherein the apparatus comprises:
a receiving unit, configured to receive a first low-power request message from the first device, wherein the first low-power request message comprises a first low-power request mode, a first low-power request direction, and a low-power request gear, the first low-power request mode is entering low power, and the first low-power request direction comprises unidirectional or bidirectional; and
a sending unit, configured to send, to the first device, acknowledgment/negative acknowledgment information corresponding to the first low-power request message.

62. The apparatus according to claim 61, wherein a link between the first device and the second device comprises a main link and a sideband link, the main link is a unidirectional transmitter link from the first device to the second device, the sideband link is a bidirectional link, and the sending unit is specifically configured to:
send the acknowledgment/negative acknowledgment information through the sideband link.

63. The apparatus according to claim 61 or 62, wherein the apparatus further comprises a management unit, configured to:
control a receiver link in a main link of the second device to enter a low-power state indicated by the low-power request gear.

64. The apparatus according to claim 63, wherein the first low-power request direction is bidirectional, and the management unit is further configured to:
control a transmitter link in the main link of the second device to enter the low-power state indicated by the low-power request gear.

65. The apparatus according to any one of claims 61 to 64, wherein the low-power request gear comprises one or more of the following:
a low-power gear at which a receiver side does not support a control frame-based wakeup capability;
or,
a low-power gear at which a receiver side supports a control frame-based wakeup capability.

66. The apparatus according to any one of claims 61 to 65, wherein the first low-power request message is packaged as a logical layer main link management packet or a logical layer sideband link management packet for transmission.

67. The apparatus according to any one of claims 61 to 66, wherein the low-power request gear is the low-power state at which the receiver side does not support the control frame-based wakeup capability, and the link between the first device and the second device comprises the main link and the sideband link;
the receiving unit is further configured to receive a second low-power request message from the first device through the sideband link, wherein the second low-power request message comprises a second low-power request mode and a second low-power request direction, the second low-power request mode is exiting low power, and the second low-power request direction comprises unidirectional or bidirectional; and
the sending unit is further configured to send, to the first device through the sideband link, acknowledgment/negative acknowledgment information corresponding to the second low-power request message.

68. The apparatus according to claim 67, wherein the apparatus further comprises a management unit, configured to:
control the receiver link in the main link of the second device to exit the low-power state.

69. The apparatus according to claim 68, wherein
the management unit is further configured to exit, by the transmitter link in the main link of the second device, the low-power state; and
the sending unit is further configured to: after exiting the low-power state, continuously send a first control frame to perform link recovery.

70. The apparatus according to any one of claims 67 to 69, wherein the first low-power request direction is unidirectional, and the second low-power request direction is unidirectional.

71. The apparatus according to any one of claims 67 to 69, wherein the first low-power request direction is bidirectional, and the second low-power request direction is unidirectional.

72. The apparatus according to any one of claims 67 to 69, wherein the first low-power request direction is bidirectional, and the second low-power request direction is bidirectional.

73. The apparatus according to any one of claims 61 to 66, wherein the first low-power request direction is bidirectional, the low-power request gear is the low-power state at which the receiver side does not support the control frame-based wakeup capability, and the link between the first device and the second device comprises the main link and the sideband link;
the sending unit is further configured to send a third low-power request message to the first device through the sideband link, wherein the third low-power request message comprises a third low-power request mode and a third low-power request direction, the third low-power request mode is exiting low power, and the third low-power request direction is bidirectional; and
the receiving unit is further configured to receive, from the first device through the sideband link, acknowledgment/negative acknowledgment information corresponding to the third low-power request message.

74. The apparatus according to claim 73, wherein
the apparatus further comprises the management unit, configured to exit, by the transmitter link and the receiver link in the main link of the second device, the low-power state; and
the sending unit is further configured to: after exiting the low-power state, continuously send a first control frame to perform link recovery.

75. The apparatus according to any one of claims 61 to 66, wherein
the receiving unit is further configured to receive one or more second control frames from the first device, wherein the second control frame is used by the transmitter side to wake up the high-speed link line, and different lane rates correspond to different second-control-frame payloads; and
the apparatus further comprises the management unit, configured to control the receiver link in the main link of the second device to exit the low-power state.

76. The apparatus according to any one of claims 61 to 66 or claim 75, wherein
the apparatus further comprises the management unit, configured to control the transmitter link in the main link of the second device to exit the low-power state;
the sending unit is further configured to send one or more second control frames to the first device; and
the sending unit is further configured to continuously send a first control frame to perform link recovery.

77. The apparatus according to claim 75 or 76, wherein
when a lane rate is HS1 (2 gigabits/second (Gigabits Per Second, Gbps)/4 Gbps), a payload length of a second control frame is 16 bytes, and a payload is fixedly 0x0000_FFFF repeated four consecutive times;
when a lane rate is HS2 (6 Gbps/8 Gbps), a payload length of a second control frame is 32 bytes, and a payload is fixedly 0x0000_0000_FFFF_FFFF repeated four times;
when a lane rate is HS3 (10 Gbps/12 Gbps/16 Gbps), a payload length of a second control frame is 64 bytes, and a payload is fixedly 0x0000_0000_0000_0000_FFFF_FFFF_FFFF_FFFF repeated four times; and
when a lane rate is HS4 (20 Gbps/24 Gbps), a payload length of a second control frame is 96 bytes, and a payload is fixedly 0x0000_0000_0000_0000_0000_0000_FFFF_FFFF_FFFF_FFFF_FFFF_FFFF repeated four times.

78. The apparatus according to claim 69, 74, or 76, wherein the first control frame is a logical layer training sequence 2 LLCF_TS2, and LLCF_TS2 is used to confirm a synchronization status between the transmitter side and the receiver side.

79. The apparatus according to claim 69, 74, 76, or 78, wherein the sending unit is specifically configured to:
continuously send the first control frame to perform lane locking; and
after lane locking succeeds, perform multi-lane alignment.

80. The apparatus according to claim 69, 74, 76, 78, or 79, wherein a specified quantity of first control frames indicate that lane locking succeeds.

81. A compute device, wherein the compute device comprises a memory and at least one processor, the memory is configured to store a group of computer instructions, and when the processor executes the group of computer instructions, operation steps in the method according to any one of claims 1 to 40 are performed.

82. A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform operations in the method according to any one of claims 1 to 40.

83. A data transmission system, wherein the data transmission system comprises a data sending apparatus and a data receiving apparatus, the data sending apparatus comprises the apparatus for managing a low-power state according to any one of claims 41 to 60, and the data receiving apparatus comprises the apparatus for managing a low-power state according to any one of claims 61 to 80.

84. A computer-readable storage medium, comprising computer software instructions, wherein when the computer software instructions are run on a computer, the computer is enabled to perform operation steps in the method according to any one of claims 1 to 40.

85. A computer program product, wherein the computer program product comprises a software program, and when the software program is executed by a computer or a processor, the computer or the processor is enabled to perform operation steps in the method according to any one of claims 1 to 40.
